(19) Europäisches Patentamt
European Patent Office
Office européen des brevets

(11) EP 0 420 438 B1

(12) EUROPEAN PATENT SPECIFICATION

(45) Date of publication and mention of the grant of the patent: **13.03.1996 Bulletin 1996/11**

(51) Int Cl.$^6$: **G11B 5/596**

(21) Application number: **90309906.7**

(22) Date of filing: **11.09.1990**

# (54) A method of and apparatus for detecting position error of a transducer

Verfahren und Gerät zum Erfassen von Positionierungsfehlern eines Schreib/Lesekopfes

Méthode et appareil pour détecter l'erreur de positionnement d'un transducteur

(84) Designated Contracting States:
**DE FR GB IT NL**

(30) Priority: **29.09.1989 US 415054**

(43) Date of publication of application:
**03.04.1991 Bulletin 1991/14**

(73) Proprietor: **SEAGATE TECHNOLOGY INTERNATIONAL**
**Georgetown, Grand Cayman Island (KY)**

(72) Inventors:
- **Weispfenning, Gerald Lee**
  **Minneapolis, Minnesota 55407 (US)**
- **Goss, Lloyd Chambers**
  **Bloomington, Minnesota 55438 (US)**

(74) Representative: **Sturt, Clifford Mark et al**
**J. MILLER & CO.**
**34 Bedford Row,**
**Holborn**
**London WC1R 4JH (GB)**

(56) References cited:
**EP-A- 0 094 314** **EP-A- 0 332 056**
**US-A- 4 590 526**

- **IBM TECHNICAL DISCLOSURE BULLETIN. vol. 22, no. 12, May 1980, NEW YORK US pages 5436 - 5438; liu: "quad-burst servo pattern"**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).



Printed by Jouve, 75001 PARIS (FR)

## Description

This invention relates to methods of and apparatus for detecting position errors of transducers.

Disk file data storage systems contain one or more magnetic disks on which data is stored in concentric tracks. A transducer writes, or magnetically encodes, the data on the track. The transducer is also capable of reading the magnetically encoded data from the tracks.

An electro-mechanical actuator operates within a negative feed back, closed loop servo system. The actuator moves the transducer radially for track seek operations and holds the transducer directly over a track for track following operations.

A servo transducer reads position information from the disk and provides a position signal which is decoded by a position demodulator and presented in digital form to a servo control micro-processor. The servo control micro-processor essentially compares actual radial position of the transducer over the disk with desired position and commands the actuator to move in order to minimise position error.

In one type of servo system, one disk surface is dedicated to contain servo tracks which are encoded with servo position information. The servo position information in the servo tracks is condensed to evenly spaced sectors. A servo transducer flies over the servo sectors as the disk rotates and produces a sampling effect. The actual position transducer information is up-dated at the end of each servo sector through the use of track identification information and position error information. The track identification number is pre-written into each servo sector and serves as coarse transducer position information. The position error information is written in the servo sector and represents the distance that the servo transducer is located from the centre of the track. This position error information serves as fine transducer position information.

The position error information is generally written in two fields. One is referred to as a quadrature field and the second is called a normal field. Position error information obtained from the normal field or the quadrature field is called a normal or quadrature position sample. By decoding the position samples obtained from these two fields, the off track position of the transducer is determined relative to the centre of the track. The position samples are typically decoded by integrating the analog position signal provided by the transducer which represents the position error information magnetically encoded on the disk. The integrated signal is then converted to a digital signal representing transducer position error.

In the past, the normal field and quadrature field, as encoded on the magnetic disk, were located adjacent one another. As the transducer flew over the normal field and then the quadrature field, the position samples from the normal and quadrature fields were decoded. However, radial movement of the transducer over the magnetic disk resulted in a slanted trajectory of the transducer with respect to the quadrature and normal fields on the magnetic disk. The slanted trajectory causes non-linearities in the form of an apparent phase shift in the position samples decoded from the quadrature and normal fields. This phase shift resulted in non-linearities in the integrated position signal. The non-linearities also caused inefficient actuator control. An example of such a system is disclosed in US Patent Number 4,590,526 which employs a series of alternating and quadrature fields of equal length the output from which is averaged to produce usable control information even though the information in one of the fields may be in error.

According to one aspect of the present invention, there is provided a method of detecting transducer position error of a transducer in a data storage system, the method comprising: providing first and second quadrature fields and a normal field on a disk in the data storage system, the quadrature and normal fields each containing position information, and the first and second quadrature fields being positioned on opposite sides of the normal field; reading position information from the first quadrature field; reading position information from the normal field to produce a normal position word; and reading position information from the second quadrature field; characterised in that the first and second quadrature fields are each half of the length of the normal field; and in that the position information from the first quadrature field is combined with the position information from the second quadrature field to produce a total quadrature word to compensate for a temporal shift in position information read from the normal field relative to position information read from the first and second quadrature fields caused by the radial velocity of the transducer over the disk; the total quadrature word and the normal position word representing the transducer position error.

The method may also comprise combining the normal position word with the total quadrature word to produce a composite position error sample representing position error.

The method may further comprise reading position information from a track identification field on the disk to produce a track identification word.

Preferably, the method includes combining the track ID word with the composite position error sample to produce a total position word representing total transducer position.

According to another aspect of the present invention there is provided a data storage disk with a sector on it, said sector containing position information used to determine position error of a transducer over the disk in a data storage system, the sector comprising: a normal field for generating a normal position word and having a length and a first side and a second side, the first side being oriented opposite the second side on the disk; a first quadrature field, having a length and being located on the first side of the normal field; and a second quadrature field, having a length and being located on the second side of the normal field, the normal field and the first and second quadrature fields containing position information; characterised in that the first and second quadrature fields are half the length of the normal field, and are arranged relative to the normal field to compensate for temporal shifts in position information read from the normal field relative to position information read from the quadrature fields caused by radial velocity of a transducer over the disk, the first and second quadrature fields being such that, when they are combined to produce a total quadrature word, the total quadrature word and the normal position word represent the transducer position error.

According to a further aspect of the present invention, there is provided an apparatus for detecting transducer position error of a transducer in a data storage system, characterised by comprising: a storage disk having a sector containing position information, the sector including a normal field having a length and having a first side and second side, the first side being oriented opposite the second side on the disk, a first quadrature field, and a second quadrature field; first reading means for reading position information from the first quadrature field; second reading means for reading position information from the normal field to produce a normal position word; and third reading means for reading position information from the second quadrature field; characterised in that the first and second quadrature fields are half the length of the normal field and are positioned on the first and second sides of the normal field respectively; and in that first combining means is provided for combining the position information from the first quadrature field with the position information from the second quadrature field to produce a total quadrature word, the first combining means combining the position information to compensate for shifts between the position information from the normal and quadrature fields caused by radial velocity of the transducer over the disk, and the total quadrature word and the normal position word representing the transducer position error.

The apparatus may include second combining means for combining the normal position word with the total quadrature word to produce a composite position error sample representing position error.

Additionally or alternatively the apparatus may include fourth reading means for reading position information from a track identification field on the disk to produce a track identification word.

The apparatus may further include second combining means for combining the track ID word with the composite position error sample to produce a total position word representing total transducer position.

The first combining means preferably includes adding means for adding the position information from the first quadrature field to the position information from the second quadrature field.

The invention is illustrated, merely by way of example, in the accompanying drawings, in which:-

Figure 1 is a block diagram of one embodiment of a demodulating system according to the present invention;
Figure 2 is a view of a disk surface used in a sectored servo system;
Figure 3A is an enlarged view of a portion of a servo sector of the disk shown in Figure 2;
Figure 3B is a diagram of the format of servo information in one servo sector of Figure 3A;
Figure 4A shows a transducer output signal amplitude as a function of track radius for one servo sector;
Figure 4B shows the relationship between the transducer and magnetised areas on the disk;
Figure 5 is a diagram used to describe mathematically the amplitude of the transducer output signal as a linear function of the distance of the transducer centre from the track centre;
Figure 6 is a detailed block diagram of a servo position demodulator;
Figure 7 is a timing diagram showing PES capacitor voltage during one servo sector;
Figure 8 is a timing diagram showing the relationship between events in the servo position demodulator of Figure 6;
Figure 9A is a graph showing the output of a multiplier of the servo position demodulator of Figure 6 as a function of track radius;
Figure 9B is a diagram showing magnetised bits in a servo sector and the position of the transducer which corresponds to the positions in Figure 9A;
Figure 10 is a diagram which illustrates the relationship between the final voltage on the PES capacitor and the off track error of the transducer;
Figure 11 is a graph of an analog voltage PES1 versus track radius of the transducer in one servo sector;
Figure 12A is a more detailed block diagram of a DC null loop;
Figure 12B is a timing diagram showing the relationship between key signals in the DC null loop of Figure 12A;
Figure 13A shows the concept of a total position word;
Figure 13B is a diagram showing PES voltages and the least significant bit of the raw track identification number as a function of transducer position;
Figure 13C is a truth table giving the correction number for each case shown in Figure 13A;
Figure 13D is a block diagram of a track identification correction feature;
Figure 13E shows one implementation of the track identification correction feature;
Figure 14A shows track crossing plots for the PES fields in a servo on-data-system;
Figure 14B shows the relationship between the transducer position in the servo sector and the track crossing plots;

Figure 14C shows the position of the transducer over one track in the servo sector;
Figure 15A shows transducer trajectory over a servo sector caused by radial movement of the transducer as the disk rotates;
Figure 15B is a plot showing the effect of radial velocity of the transducer on the PES track crossing plots;
Figure 15C shows the corrected PES track crossing plots after being compensated for radial velocity of the transducer;
Figure 16A shows the track crossing plots for the PES fields in a dedicated servo system;
Figure 16B shows the relationship between the transducer position in the servo sector and the track crossing plots;
Figure 16C shows the position of the transducer over one track in the servo sector;
Figure 17 shows a servo system having multiple independent actuators; and
Figure 18 shows a top view of a disk in the servo system shown in Figure 17.

Figure 1 is a block diagram of a negative feed back transducer positioning system 8 according to the present invention. A stack of magnetically encodable disks is shown generally at 10. An electro-mechanical actuator (or E-block) 12 is used to position a servo transducer 14 and a plurality of data transducers 18 radially with respect to a servo disk 16 and data disks 17, respectively. The servo transducer is positioned over a desired track on the servo disk 16 where it is held while the data transducers 18, which are also connected to the E-block 12, perform read or write operations.

The servo transducer 14 reads position information from servo disk 16 and provides position signals to a pre-amplifier 20 where it is amplified and provided to a servo position demodulator 22. The servo position demodulator 22 decodes the position information and presents it, in digital form, to a servo control processor 24. The servo control processor 24 compares the decoded position signal received from the servo position demodulator 22 with a desired position signal to determine a transducer position error. The transducer position error represents the difference between the actual position of the transducer 14, indicated by the decoded position signal, and the desired position indicated by a desired position signal.

The servo control processor 24 then generates a position correction signal which is converted to an analog signal in digital-to-analog (D/A) converter 26 and applied to the E-block 12 through a power amplifier 28. The position correction signal causes the E-block 12 to move the transducers 14, 18 radially with respect to the disks 16, 17 in order to minimise the transducer position error.

One disk surface of the servo disk 16 is dedicated to contain servo tracks. This surface is shown in Figure 2. The servo position information in the servo tracks is not continuous but is condensed into evenly spaced sectors. This is known as a sectored servo system. The servo transducer 14, flying over the servo sectors as the servo disk 16 rotates, produces a sampling effect in which the actual, decoded position information provided to the servo control processor 24 is up-dated at the end of each servo sector.

Figure 3A is an enlarged portion of one servo sector on the servo disk 16. Figure 3B shows the format of servo information, represented by black and white bars, in one servo sector on the servo disk 16. The black and white bars represent oppositely magnetised areas on a surface coating of the servo disk 16. The oppositely magnetised areas are recorded close enough together so that the position signal generated by the servo transducer 14 is generally sinusoidal.

Figure 3B shows that one servo sector contains several distinct fields. The fields include a phase locked oscillator/automatic gain control (PLO/AGC) synch field, a track identification (track ID) field, three position error sample (PES) fields and an index field. Figure 3B also shows the magnetised areas for three tracks A, B and C on servo disk 16 where the outer radius and inner radius of the tracks is indicated. The direction of the servo transducer velocity and the track centre of each track is indicated by dashed arrows A, B and C, respectively.

As the servo transducer 14 flies over the tracks A, B or C on the servo disk 16, it generates a generally sinusoidal position signal. The sinusoidal position signal represents the magnetically encoded information shown in Figure 3B.

Figure 4A illustrates the position signal generated by the servo transducer 14 as a function of five radial transducer positions along a single track (for example track B) on the servo disk 16 where position 3 represents the centre of the track. Positions 1 and 5 represent off centre positions where the centre of the servo transducer 14 is radially aligned with, and flying over the outer radius or inner radius of track B, respectively. If the servo transducer 14 were tracking along position 1, a position error equal to the radial distance between position 1 and position 3 would exist. Similarly, if transducer 14 were tracking along position 5, a position error equal to the radial distance between position 3 and position 5 would exist.

Positions 2 and 4 also represent off centre positions. However, the off centre position error is not as large as the error associated with positions 1 and 5. Figure 4B shows the spatial relationship between the servo transducer 14, the magnetised areas of the servo disk 16, and each of the transducer positions 1 to 5.

The information encoded in the PLO/AGC synch field is identical in phase and frequency from track to track along the servo disk 16. Therefore, Figure 4A shows that, as the servo transducer 14 flies over this region, its output position signal is a constant frequency, independent of the particular track over which it is flying and independent of radial position on the track. The information in this field is encoded in this way so that a phase locked oscillator in the servo position demodulator 22 can synchronise with the output of the servo transducer 14.

In the track ID field, the track ID number is encoded as a Gray code where only one bit changes from track to track. Each track ID bit is represented by one dibit cell. The amplitude of a dibit depends on the radial position of servo transducer 14. If the dibit amplitude exceeds a given threshold, in this embodiment one half the maximum possible amplitude, the dibit is decoded as a logic 1 in the servo position demodulator 22. Otherwise, it is decoded as a logic 0. Therefore, $\underline{n}$ bit cells define $2^n$ servo tracks on the disk.

In the PES fields (PES1, PES2A and PES2B) the magnetic information encoded on adjacent tracks is recorded 180° out of phase. This produces a chequer-board pattern of magnetisation. The magnetic information in the PES fields is also recorded plus or minus 90° out of phase with respect to the magnetic information encoded in the PLO/AGC synch field.

The PES1 field is also called a normal field. The boundary between the magnetisation tracks in the normal field are arranged so that they lie on the centre line of the data tracks. Therefore, when the servo transducer 14 is over the normal field, as the servo transducer 14 moves radially further from the centre position 3 of track B, the amplitude of the position signal from the servo transducer 14 is larger. Similarly, as the servo transducer 14 moves radially closer to the centre position 3, the amplitude of the position signal is smaller.

The PES2 field (also known as a quadrature field) is split in half. Half of the quadrature field (the PES2A field) lies on one side of the normal field and half (the PES2B field) lies on an opposite side of the normal field. The quadrature field is encoded with a magnetisation pattern which is identical to that of the normal field but which is radially offset from it by half a track width. Therefore, when the servo transducer 14 is over the quadrature field, the position signal provided by the servo transducer 14 is at a maximum amplitude when the servo transducer 14 is flying over the track centre position 3 and at a minimum amplitude when it is flying over the off centre positions 1 and 5.

The information read from the normal and quadrature fields is referred to as a position error sample. The normal and quadrature fields each produce a separate position error sample. The amplitude of the position signal provided by the servo transducer 14 representing the position error samples is a linear function of the distance of the centre of the servo transducer 14 from the track centre (position 3). This is shown theoretically in Figure 5.

The servo transducer 14 is moving relative to the servo disk 16 in the direction indicated by arrow 30. The servo transducer 14 may be regarded as being composed of a set of read elements of differential width operating in parallel, whose output signals are added together or integrated to produce the total output voltage of the position signal from the servo transducer 14. For a first order approximation, it is assumed that the position signal from the servo transducer 14 is sinusoidal. Any fringing field effect is neglected. Since the magnetic pattern in the servo sector was originally written 180° out of phase for adjacent tracks, the signal produced by a differential read element, $\underline{dy}$, will be defined as either plus or minus Vm Cos (wt). The total output voltage from the servo transducer 14 depends on how many differential read elements produce +Vm Cos (wt) and how many produce -Vm Cos (wt).

To express this mathematically, let $\underline{d}$ equal the distance from the centre of the servo transducer 14 to the nearest data track centre (a boundary between the +Vm Cos (wt) and -Vm Cos (wt) regions in the PES1 field). The distance $\underline{d}$ may be positive (towards the inner radius) or negative (towards the outer radius). If $\underline{b}$ equals the width of the servo transducer 14, then each read element $\underline{dy}$ contributes a fraction equal to $\underline{dy/b}$ towards the total output voltage provided by the servo transducer 14. The integral for the PES1 field as shown in Figure 5 is solved as follows:

$$V(t) = \int_{-\frac{b}{2}+d}^{0} (^{-}Vm)\,\mathrm{Cos}\,wt \bullet \frac{dy}{b} + \int_{0}^{+\frac{b}{2}+d} (^{+}Vm)\,\mathrm{Cos}\,wt \bullet \frac{dy}{b}$$

$$= \frac{2d}{b}\,Vm\,\mathrm{Cos}\,wt \;\;{}_{1}\bullet \;\; -\frac{b}{2} \le d \le +\frac{b}{2} \qquad \ldots \quad \text{Eq. 1}$$

where

b = core gap width of transducer 14

Vm = maximum amplitude
d = off track error
w = frequency of position signal.

The results show that the position signal of the servo transducer 14 V(t) has an amplitude which is a linear function of the off track error, d. This effect can be seen visually in Figure 4A where the signal amplitude in the PES1 field is proportional to the distance of the centre of the servo transducer 14 from the track centre, radial position 3. Also the polarity of the position signal generated by the servo transducer 14 which corresponds to the PES1 field indicates the direction of the off track error, d.

In reality, the amplitude of the position signal of the servo transducer 14 does not change linearly across the full track width. It becomes non-linear at some point near the outside twenty five percent of the track, depending on the physical dimensions of the servo transducer 14 and its relationship to the dimensions of the written magnetised pattern.

However, the presence of the quadrature field (PES2) allows the servo position demodulator 22 to overcome this non-linearity. Figure 4A shows the quadrature relationship between the PES2A and the PES2B fields and the PES1 field. The amplitude of the position signal provided by the servo transducer 14 in the PES2 field is at a maximum, and therefore in a non-linear region when the amplitude in the PES1 field is at a minimum (and therefore in a linear region), and vice versa. Hence, either the quadrature or the normal field is always in a linear region and there is always a linear relationship between the position signal corresponding to one of the PES fields (PES1 or PES2) and the distance between the centre of the servo transducer 14 and the track centre (the off track error) no matter where the servo transducer 14 is positioned across the radial width of a track on the servo disk 16.

Figure 6 is a more detailed block diagram of the servo position demodulator 22 which decodes position information represented by the analog position signal from the servo transducer 14. The position signal from the servo transducer 14 is applied to a filter 32 where it is filtered to remove high frequency noise. The filtered signal is then applied to an automatic gain control (AGC) loop 34 (Figure 6B).

The AGC loop 34 is comprised of a voltage controlled amplifier 36, an analog multiplier 38, a voltage-to-current converter 40 and a current summing junction 42. An analog switch 44 and a capacitor 46 allow the AGC loop 34 to be configured in an acquire mode or a hold mode (explained later).

An overall reference for the automatic gain controlled amplitude is provided through a filter 48 by a micro-processor (not shown). The overall reference determines the final position gain in volts per micro-inch.

The AGC loop 34 is initially calibrated by the micro-processor and compensates for changes in input signal amplitude due to changes in track radius, flying height and other media properties.

Once properly amplified, an automatic gain controlled (AGC'd) analog signal from the AGC loop 34 is transmitted to a voltage comparator 50 which generates serial digital data corresponding to the AGC'd analog signal. The comparator 50 provides the serial digital data to a synch detector circuit 52 and a serial-to-parallel shift register 54.

The synch detector circuit 52 identifies the start of a servo sector and enables a programmable event generator (PEG) 56. The programmable event generator 56 produces timing and window logic signals required for position demodulation in the servo position demodulator 22.

Next, the comparator 50 decodes track ID dibits as either logic 1 or logic 0 depending on their amplitude. In this embodiment, the comparator 50 has a threshold of one half the maximum automatic gain controlled amplitude. The serial digital track ID bits are shifted into the shift register 54 to produce a parallel track ID word. This track ID word is in Gray code and is converted to a binary track ID word by combinational logic 58. The binary track ID word is latched in a latch 60 and provided to track ID correction logic 62 which will be explained in more detail later. The output of the correction logic 62 is a track identification signal or absolute position signal which identifies the particular track over which the servo transducer 14 is flying.

The shift register 54 is also used to provide index information to an index pattern detector 64 which is not important to an understanding of the present invention and so will not be discussed further.

The AGC'd analog signal from the AGC loop 34 is also transmitted to a phase locked oscillator loop (PLO loop) 66 (Figure 6A). The PLO loop 66 comprises an analog switch 68, a phase comparator/multiplier 70, a voltage-to-current conververter (charge pump) 72, which includes a balance circuit 74 for balancing the voltage-to-current converter 72 once per servo sector so that there is zero current output for zero voltage input, an analog switch 76, a filter 78, a voltage controlled oscillator 80 and a clock generator 82. The PLO loop 66 locks onto the phase and frequency of the AGC'd analog signal provided by the AGC loop 34. Then, the analog switch 76 is opened allowing the PLO loop 66 to open. The signal provided to the voltage controlled oscillator 80 is then held constant. Hence, a constant frequency results at the output of the voltage controlled oscillator 80. Therefore, the frequency of a digital feed back signal 120 from the clock generator 82 is also constant.

The output of voltage to the voltage-to-current converter 72 is also provided to a PES capacitor 84 through an analog switch 86. Voltage is integrated on the capacitor 84 during synchronous demodulation of PES fields PES1, PES2A and PES2B. This voltage is applied through a buffer 88 to an analog-to-digital (A/D) converter 90. The output of the A/D converter 90 is provided to a composite PES generator logic 92. The composite PES generator logic 92 comprises latches 94, 96, a digital adder 98, multiplexers 100 and 102, multiplexer control logic 104, a switchable inverter 106 and inverter control logic 108. The output of the composite PES generator logic 92 is a composite PES word or fine position off track error which represents the distance that the servo transducer 14 is tracking from the track centre.

The composite PES word, together with the corrected track ID word, form one digital position word which is typically 19 bits long. The digital position word defines the radial position of the servo transducer 14 on the servo disk 16 in a continuous fashion down to approximately one or two micro-inches 1 micro-inch = 25,4 nm of quantisation.

The PES capacitor 84 is also selectively connected to a DC null loop 110 comprised of the A/D converter 90, a one-bit latch 112, and integrator 114, a buffer 116, an analog switch 118 and the buffer 88. The DC null loop 110 drives the initial voltage on the PES capacitor 84 to a mid-point between upper and lower reference voltages applied to an internal resistor ladder in the A/D converter 90.

Operation of the positioning system is described with reference to Figures 7 and 8. Figure 7 is a timing diagram which shows the relationship between logic control signals generated by the programmable event generator 56, the analog position signal and the PES capacitor voltage as the servo transducer 14 moves over one servo sector. Figure 8 is a timing diagram showing the relationship between various signals related to the synchronous demodulation of the fine position information in the servo position demodulator 22 as the servo transducer 14 moves along one servo sector.

As the servo transducer 14 passes over the AGC/PLO synch field in the servo sector, the programmable event generator 56 closes the switch 44 to close the AGC loop 34. The AGC loop 34 acquires the proper gain so that the amplitude of the analog position signal is compensated for amplitude changes caused by changes in track radius, transducer flying height, and other media properties. Also, as the servo transducer 14 flies over the AGC/PLO synch field, the programmable event generator 56 closes the analog switches 68, 76 to close the PLO loop 66. When the PLO loop 66 is closed, the voltage control oscillator 80 locks onto the phase and frequency of the AGC'd analog signal provided by the AGC loop 34. The PLO loop 66 uses the digital feed back signal 120 which locks in at a 90° phase shift from the AGC'd analog signal provided by the AGC loop 34.

After the servo transducer 14 has passed over the PLO/AGC synch field, the analog switches 44, 76 are opened and both the AGC loop 34 and the PLO loop 66 enter a hold mode. While in the hold mode the amplification in the AGC loop 34 and the phase and frequency of the feed back signal 120 in the PLO loop 66 remain constant.

Next, the servo transducer 14 passes over the track ID field in the servo sector. The serial digital track ID bits are formed by the comparator 50 and shifted into the shift register 54. The Gray code track ID bits are converted into a binary code by the converter 58 and latched into the latch 60.

Finally, the servo transducer 14 enters the PES fields in the servo sector. The switch 68 is closed applying the analog position signal to the phase comparator/multiplier 70 while the switch 76 remains open. The feed back signal 120 is multiplied by the analog position signal in the phase comparator/multiplier 70. Since the information in the PLO/AGC synch field is recorded 90° out of phase with the information in the PES fields, and since the feed back signal 120 is held with a 90° phase shift, the multiplication performed at the phase comparator/multiplier 70 produces a full wave rectification of the analog position signal. This is shown by plot C in Figure 8.

Figure 9A illustrates the output of the phase comparator/multiplier 70 for the five radial positions of the servo transducer 14 which were described earlier with reference to Figure 4A. Also, Figure 9B shows the spatial relationship between the centre of the servo transducer 14 and the centre of track B in radial transducer positions 1 to 5. In the PES fields, the amplitude of output signal of the phase comparator/multiplier 70 is proportional to the distance between the centre of the servo transducer 14 and the centre of track B. The polarity of the DC component of the signal indicates the direction of the offset. Hence, when the current provided by the voltage-to-current converter 72 is applied to the PES capacitor 84, the current is integrated, producing a positive or negative voltage ramp depending on the polarity of the current. Several such voltage ramps are indicated at points 122, 124 and 126 in Figure 8.

Figure 10 illustrates the general case where n cycles of current are integrated to produce the analog voltage on the PES capacitor 84 corresponding to one PES field. The integral is solved as follows:

$$Vpes = \frac{1}{c}\int_{n\ cycles} i(t)dt = \frac{n}{c}\int_{1\ cycle} i(t)dt = \frac{n}{c}\int_{-\pi/2}^{+\pi/2} i(\Theta)\frac{d\Theta}{w}$$

$$= \frac{n}{c}\int_{-\pi/2}^{+\pi/2} \frac{2d}{b}\, Vm\ gm\ Cos\ \Theta\ \frac{1}{w}\ d\Theta = \frac{n}{c} \bullet \frac{2}{b} \bullet \frac{2Vmgm}{w} \bullet d \quad \ldots \quad Eq.\ 2$$

where

- n = # cycles measured
- b = width of transducer 14
- c = capacitance of PES capacitor 84
- Vm = maximum AGC'd amplitude
- gm = gain through charge pump 72
- w = frequency of position signal.

The result shows that the final voltage on the PES capacitor 84 is directly proportional to the off track error, d, since n, c, b, Vm, gm and w are all constants. The relationship between the final analog voltage on the PES capacitor 84 corresponding to the PES1 field and the off track error, d, is graphically illustrated in Figure 11. The voltage ramps for five radial positions in one servo sector are shown as they relate to off track error, d.

The final voltage on the PES capacitor 84 is also proportional to the number, n, of cycles integrated. In the PES1 field, n cycles are integrated and the A/D converter 90 converts the analog voltage on the PES capacitor 84 into a digital signal which is latched in the latch 94. For the PES2 fields, first n/2 cycles (for the PES2A field) are integrated and the A/D converter 90 converts the value to a digital signal which is latched in the latch 96. Then, after the PES1 field is integrated, another n/2 cycles (for the PES2B field) are integrated and another A/D conversion is made by the A/D converter 90. The resulting digital signal is provided to the adder 98 where the digital signal representing the PES2A field is added to it to produce a full PES2 position sample. The number of cycles, n, chosen should be high enough to achieve the averaging of possible media defects over several cycles. However, it must not be so high as to produce an overly long servo sector since the length of the servo sector limits the maximum radial velocity of the servo transducer 14.

The final voltage on the PES capacitor 84 is also proportional to the capacitance of the PES capacitor 84. Note that the same PES capacitor 84 is used to produce the analog PES voltage for both the PES1 and PES2 position samples. After the A/D conversion of the final ramp voltage of a PES measurement, the digital result is latched so the analog voltage on the PES capacitor 84 can be reset, and the same PES capacitor 84 can be reused for the next PES measurement. This eliminates the possibility of position error due to capacitance mis-match which would result if two or more capacitors were used to produce the analog PES voltage. Using only one capacitor to integrate the position signal for both the quadrature and normal fields increases the accuracy with which the servo transducer 14 follows the track.

Accordingly, only a single A/D converter 90 is required to convert the analog PES voltages to digital signals. This lowers the overall cost of the servo position demodulator 22. Also, the A/D conversion made by the A/D converter 90 is made early in the processing chain in the servo position demodulator 22. The addition of the PES2A and PES2B position samples and the formation of the composite PES signal all take place in the digital domain. This minimises the amount of analog circuitry and associated errors such as off-set errors, gain errors, linearity errors and variation with temperature. Additionally, all of the digital circuits can be fabricated into one compact integrated circuit to save space.

Because DC voltage off-sets in the buffer 88 and the analog switch 118 would create an offset error in the final digital composite PES signal, the DC null loop 110 is provided. Figure 12A shows the DC null loop 110 in greater detail and Figure 12B is a timing diagram showing the relationship between signals occurring in the DC null loop 110. As the servo transducer 14 passes over each servo sector, and before it reaches the PES fields, the programmable event generator 56 closes analog switch L3 connecting PES capacitor 84 to the output voltage of integrator 114.

Next, programmable event generator 56 generates a signal on an output L7 causing the A/D converter 90 to perform a first A/D conversion. The A/D converter 90 comprises a resistor ladder connected between reference voltages VREF+ and VREF-, 15 comparators including a most significant bit comparator 130, and a logic decode 132 which decodes a most significant bit of the A/D converter 90. Resistors R1 and R2 which represent the resistor ladder condensed into two resistors, act as a voltage divider creating an internal voltage mid-point Vmidref at a node 129.

After the first A/D conversion, the most significant bit of the A/D converter 90 is decoded and latched into the one-bit latch 112. The value of the latched most significant bit depends on whether signal Vin is greater or less than the internal voltage Vmidref at the node 129. During initial calibration of the servo position demodulator 22, the gain in the AGC loop 34 is set so that the A/D converter 90 full digital scale corresponds to one half of a servo track. The internal voltage Vmidref corresponds to the track centre or zero position error. The latched, most significant bit is applied to the integrator 114. The output of the integrator 114, an external voltage Vmidref at a node 134, is driven towards the value of the internal voltage Vmidref. The gain through the integrator 114 is chosen so that the external voltage Vmidref just crosses the internal voltage Vmidref before the next servo sector. This is shown in Figure 12B. The peak to peak limits of the external voltage Vmidref must be kept much lower than the analog value of a least significant bit of the A/D converter 90. This keeps the initial voltage on the PES capacitor 84 as close as possible to the exact centre of the digital scale.

After the first A/D conversion is completed, the switch 118 is opened and the A/D converter 90 is available for conversions 2, 3 and 4 which are conversions for the position samples read from the PES2A, PES1 and PES2B fields. Between position samples, the switch 118 closes to re-set the PES capacitor 84 to the external voltage Vmidref. Hence, the DC null loop 110 compensates for static or time variable DC offsets in the buffer 88 and the switch 118, which are inside the DC null loop 110. This increases the track following accuracy of the servo transducer 14.

The technique of time multiplexing the A/D converter 90 between DC null loop operation and PES conversions eliminates the need for two separate A/D converters to perform these tasks. This reduces the cost of the servo position demodulator 22.

As described earlier, after the PES capacitor 84 is re-set to the external voltage Vmidref, the output of voltage to the voltage-to-current converter 72 is connected to the PES capacitor 84 through the analog switch 86 and the PES capacitor voltage ramps up or down as shown in Figure 8. The difference between the final voltage on the PES capacitor 84 and the initial voltage is proportional to the distance of the centre of the servo transducer 14 from the track centre.

Figure 13A shows the concept of a total position word. The track ID number and the digital value representing the PES field samples are combined to define the radial position of the servo transducer 14 anywhere on the servo disk 16. The track ID number defines the track and the PES samples define the position within the track.

However, a problem can still arise. As the servo transducer 14 flies over the track on the servo disk 16, it moves over the track ID field prior to moving over the PES fields. Hence, the track ID information is decoded earlier in time than information read from the PES fields. Since the information read from the PES fields is read later in time, it is more recent and, hence, more accurate position information than that read from the track ID field. When the servo transducer 14 is moving radially, it has a slanted trajectory across the servo sector. Therefore, it may enter the servo sector in the track ID field of one track but cross a boundary between tracks and exit the servo sector from the PES field of the next track. This will result in an occasional mismatch between the track boundary defined by the track identification information and that defined by the PES fields. It then becomes necessary to correct the track ID number so that it corresponds to the track from which the servo transducer 14 reads the PES field samples.

In the present embodiment, correction logic 140 (shown in Figures 6B and 13D) is used to detect when it is necessary to correct the track ID so that it corresponds to the track number from which the PES field samples were read. Figure 13B is a graph of the amplitude of the position signal corresponding to the PES fields, in 2's complement form, as it relates to the least significant bit in the track ID signal. Figure 13B also shows a corrected least significant bit in the track ID signal.

Trace A represents the 2's complement form of the amplitude of the position signal corresponding to the PES1 field. Trace B represents the 2's complement amplitude corresponding to the PES2 field (the PES2A field + the PES2B field). The truth table shown in Figure 13C defines the conditions where the track ID information is not correlated with the PES field information and the correction word which is required.

The correction logic 140, shown in Figure 13D, forms a correction number of $\pm$ 1 which is added to the track ID in an adder 142. For all other cases, the number 0 is added to the track ID.

Figure 13E shows the correction logic 140 in more detail. It should be noted that the addition of the correction word to the track ID could also be accomplished by software in the servo control processor 24. This correlation allows the servo control processor 24 to use bits of the digital composite PES signal along with a track ID to determine very precisely the position and velocity of the servo transducer 14 even at high radial velocities. The increased accuracy of the total position signal at high radial velocities helps to minimise both the time and power required for performing a track seek operation. At low radial velocities, such as at the end of a track seek operation, this correlation permits a smoother settling of the servo transducer on a track.

Figure 14A is an imaginary tracing of digitised final voltage values of the analog PES ramps generated at the PES capacitor 84 for all radial positions of the servo transducer 14 across four adjacent tracks in a servo-on-data system. These imaginary tracings are called track crossing plots. The digital values are in 2's complement form and the point at which the track crossing plot for the PES1 field crosses 00 hex represents the track centre.

Demodulation of the PES2A field produces the PES2A tracking plot shown in graph G1 of Figure 14A. Similarly, demodulation of the PES1 and PES2B fields produces the PES1 and PES2B track crossing plots, respectively. These three track crossing plots represent all possible ideal digital input combinations to the composite PES generator 92.

Graph G1 in Figure 14A shows the three track crossing plots condensed onto a single plane. Since there are equal number of cycles in the PES2A field and the PES2B field, their corresponding track crossing plots coincide. However, since the integration measurement time period for the PES2A and PES2B fields is only one half that of the PES1 field, the slope of the PES2A and PES2B track crossing plots in volts per micro-inch 1 micro-inch = 25,4 nm is only one half that of the PES1 track crossing plot.

The PES2A position sample is added to the PES2B position sample to produce the total PES2 or quadrature sample. One hardware implementation to perform this addition was discussed with reference to Figure 6. This addition can also be performed graphically. Graph G2 in Figure 14A shows that the addition of the PES2A and PES2B track crossing plots produces a new track crossing plot which has the same slope as the PES1 track crossing plot.

The PES1 and PES2 track crossing plots shown in graph G2 in Figure 14A are the inputs to the composite PES generator 92. However, at only one radial position along the servo disk 16, only one of the two plots is in a region where the PES amplitude is changing linearly with transducer position. There are eight distinct regions labelled a to h which repeat across the track. By monitoring the amplitude and polarity of the PES1 and PES2 position samples, the composite PES generator 92 determines over which of the eight regions the servo transducer 14 is flying. The composite PES generator 92 then creates a composite position error sample output which is the standardised form of position error sample required by the servo control processor 24. The composite PES generator 92 accomplishes this by inverting the slope or changing the sign bit of the PES1 or PES2 track crossing plots when necessary, and combining the linear portions to create the desired composite PES track crossing plot shown in graph G3 in Figure 14A.

Figures 15A to 15C show how the addition of the PES2A and PES2B position samples helps to compensate for high radial velocity of the servo transducer 14. A slanted trajectory of the servo transducer 14 is shown by arrow 150 in Figure 15A. This slanted trajectory causes an apparent shift in the PES1 and PES2B track crossing plots as shown in Figure 15B. The actual value of the PES2A and PES2B fields is shown by a solid line and the ideal value is shown by a dashed line. By adding the PES2A track crossing plot with the shifted PES2B track crossing plot, a new track crossing plot, PES2C, is formed as shown in Figure 15C. The PES2C track crossing plot has the correct orientation with respect to the PES1 track crossing plot. By using this technique, the composite PES output is generated correctly, independent of the radial velocity of the servo transducer 14. Without this feature, non-linearities in the composite PES output would occur due to the slanted trajectory of the servo transducer 14. This allows more efficient actuator control during track seek operations.

This invention is not limited for use in dedicated servo systems such as the one shown in Figure 1. This invention may also be used in hydrid servo configurations. A hybrid system has a dedicated surface containing servo sectors and other disks which contain one or more similar servo sectors per revolution which are decoded for data transducer thermal offset compensation. Since a common servo sector pattern is used, through the use of time multiplexing only one servo position demodulator is needed.

The present invention may also be used in servo-on-data type servo systems where each disk surface has servo sectors. In this type of system, customer data is written between the write protected servo sectors. Any head actively reading or writing customer data is also acting as its own track following error sensor. This increases track following precision and allows higher track densities to be achieved.

Another servo system configuration in which this invention may be used is one having multiple independent actuators 200. This is shown in Figure 17. If a multiple actuator system contains n actuators 200 and corresponding amplifiers 202, the servo sectors under servo transducers 204 on adjacent actuators are staggered by 1/n of the distance between servo sectors on one disk. The servo sectors for adjacent actuators must not overlap. This is illustrated in Figure 18. In this type of system, a multiplexer 205 continuously cycles through the servo sectors of the actuators 200. The advantage of this configuration is that only one servo control processor 24, along with a digital demultiplexer 206, D/A converters 208, the amplifiers 202 and one servo demodulator 22 are needed to control several actuators 200 (again through the use of time multiplexing).

The servo sector format described in this invention may be used with linear or rotary actuators.

A method for creating the composite PES output for a dedicated servo system is shown in Figures 16A to 16C. The servo track width can be twice the data track width. The servo transducer 14 is then twice as wide as a data transducer 18. This can help minimise non-linear effects of fringing fields read by the edges of the servo transducer 14. It can also improve the signal to noise ratio of the track ID bits. In this case, the composite PES generator 92 merely inverts the slope of the d, e, f and g segments. The servo track centres are derived alternately from PES1 and PES2 position samples.

For a servo-on-data system, the transducer is used for both serving and reading and writing customer data. The servo track and data track are automatically the same width. The composite PES track crossing plot is then formed as shown in graph G3 in Figure 14A. Slope segments a and d are re-positioned to extend the linearity of the b and c segments. This produces a linear PES plot across the full track width. Similarly, the e and h segments extend the linearity of the f and g segments. The track centre is always derived from the PES1 position sample. One advantageous feature of this method is that the composite PES field has one more bit of quantisation than the A/D converter 90 used in the servo position demodulator 22.

In the present invention, the quadrature field is split in half. Half of the quadrature field lies on one side of the normal field and half lies on the opposite side of the normal field. By adding the information from the PES2A and PES2B fields, the total quadrature crossing plot is correctly oriented with respect to the normal track crossing plot. This technique eliminates non-linearities in the composite PES output due to the slanted trajectory of the transducer 14 as it moves radially with respect to the disk 16. In essence, by using this technique, the composite PES output is generated correctly independent of the radial velocity of the transducer 14. Thus, the actuator can be controlled more efficiently during track seek operations.

**Claims**

**1.** A method of detecting transducer position error of a transducer (14) in a data storage system (10), the method comprising:

providing first (PES2A) and second (PES2B) quadrature fields and a normal field (PES1) on a disk (16) in the data storage system (10), the quadrature and normal fields each containing position information, and the first and second quadrature fields being positioned on opposite sides of the normal field (PES1);

reading position information from the first quadrature field (PES2A);

reading position information from the normal field (PES1) to produce a normal position word; and

reading position information from the second quadrature field (PES2B); characterised in that the first (PES2A) and second (PES2B) quadrature fields are each half of the length of the normal field (PES1); and

in that the position information from the first quadrature field (PES2A) is combined with the position information from the second quadrature field (PES2B) to produce a total quadrature word to compensate for a temporal shift in position information read from the normal field (PES1) relative to position information read from the first and second quadrature fields caused by the radial velocity of the transducer (14) over the disk (16); the total quadrature word and the normal position word representing the transducer position error.

**2.** The method of claim 1 characterised by comprising combining the normal position word with the total quadrature word to produce a composite position error sample representing transducer position error.

**3.** The method of claim 1 or 2 characterised by comprising reading position information from a track identification field on the disk to produce a track ID word.

**4.** The method of claim 3 characterised by comprising combining the track ID word with the composite position error sample to produce a total position word representing total transducer position.

**5.** A data storage disk with a sector on it, said sector containing position information used to determine position error of a transducer (14) over the disk (16) in a data storage system (10), the sector comprising:

a normal field (PES1) for generating a normal position word and having a length and a first side and a second side, the first side being oriented opposite the second side on the disk;

a first quadrature field (PES2A), having a length and being located on the first side of the normal field; and

a second quadrature field (PES2B), having a length and being located on the second side of the normal field (PES1), the normal field (PES1) and the first and second quadrature fields (PES2A, PES2B) containing position information;

characterised in that the first (PES2A) and second (PES2B) quadrature fields are half the length of the normal field (PES1), and are arranged relative to the normal field (PES1) to compensate for temporal shifts in position information read from the normal field (PES1) relative to position information read from the quadrature fields (PES2A, PES2B) caused by radial velocity of a transducer (14) over the disk (16), the first (PES2A) and second (PES2B) quadrature fields being such that, when they are combined to produce a total quadrature word, the total quadrature word and the normal position word represent the transducer position error.

**6.** An apparatus for detecting transducer position error of a transducer (14) in a data storage system (10), characterised by comprising:

a storage disk (16) having a sector containing position information, the sector including a normal field (PES1) having a length and having a first side and second side, the first side being oriented opposite the second side on the disk (16), a first quadrature field (PES2A), and a second quadrature field (PES2B);

first reading means for reading position information from the first quadrature field (PES2A);

second reading means for reading position information from the normal field (PES1) to produce a normal position word; and

third reading means for reading position information from the second quadrature field (PES2B);

characterised in that the first (PES2A) and second (PES2B) quadrature fields are half the length of the normal field (PES1) and are positioned on the first and second sides of the normal field (PES1) respectively; and in that first combining means is provided for combining the position information from the first quadrature field (PES2A) with the position information from the second quadrature field (PES2B) to produce a total quadrature word, the first combining means combining the position information to compensate for shifts between the position information from the normal and quadrature fields caused by radial velocity of the transducer (14) over the disk (16), and the total quadrature word and the normal position word representing the transducer position error.

**7.** The apparatus of claim 6 characterised by comprising second combining means for combining the normal position word with the total quadrature word to produce a composite position error sample representing transducer position error.

**8.** The apparatus of claim 7 characterised by comprising fourth reading means for reading position information from a track identification field on the disk to produce a track ID word.

**9.** The apparatus of claim 8 characterised by comprising third combining means for combining the track ID word with the composite position error sample to produce a total position word representing total transducer position.

**Patentansprüche**

**1.** Verfahren zur Erfassung eines Wandlerpositionierungsfehlers eines Wandlers (14) in einem Datenspeichersystem (10), wobei das Verfahren folgende Schritte umfaßt:

Schaffung erster (PES2A) und zweiter (PES2B) Quadraturfelder und eines Normalfeldes (PES1) auf einer Speicherplatte (16) in dem Datenspeichersystem (10), wobei die Quadratur- und Normalfelder jeweils Positionsinformation enthalten und die ersten und zweiten Quadraturfelder auf entgegengesetzten Seiten des Normalfeldes (PES1) angeordnet sind,

Lesen von Positionsinformation von dem ersten Quadraturfeld (PES2A),

Lesen von Positionsinformation von dem Normalfeld (PES1) zur Erzeugung eines Normalpositionswortes, und

Lesen von Positionsinformation von dem zweiten Quadraturfeld (PES2B),

dadurch gekennzeichnet,

daß die ersten (PES2A) und zweiten (PES2B) Quadraturfelder jeweils die halbe Länge des Normalfeldes (PES1) aufweisen, und

daß die Positionsinformation von dem ersten Quadraturfeld (PES2A) mit der Positionsinformation von dem zweiten Quadraturfeld (PES2B) kombiniert wird, um ein Gesamt-Quadraturwort zur Kompensation einer vorübergehenden Verschiebung der von dem Normalfeld (PES1) gelesenen Positionsinformation gegenüber der von den ersten und zweiten Quadraturfeldern gelesenen Positionsinformation zu kompensieren, die durch eine radiale Geschwindigkeit des Wandlers (14) über der Speicherplatte (16) hervorgerufen wird, wobei das Gesamt-Quadraturwort und das Normal-Positionswort den Wandler-Positionierungsfehler darstellen.

**2.** Verfahren nach Anspruch 1,
gekennzeichnet durch die Kombination des Normal-Positionswortes mit dem Gesamt-Quadraturwort zur Erzeugung einer zusammengesetzten Positionsfehler-Abtastprobe, die den Wandlerpositionierungsfehler darstellt.

**3.** Verfahren nach Anspruch 1 oder 2,
gekennzeichnet durch das Lesen von Positionsinformation von einem Spuridentifikationsfeld auf der Speicherplatte zur Erzeugung eines Spuridentifikationswortes.

**4.** Verfahren nach Anspruch 3,
gekennzeichnet durch die Kombination des Spuridentifikationswortes mit der zusammengesetzten Positionsfehler-Abtastprobe zur Erzeugung eines Gesamt-Positionswortes, das die Gesamt-Wandlerposition darstellt.

**5.** Datenspeicherplatte mit einem darauf befindlichen Sektor, der Positionsinformation enthält, die dazu bestimmt wird, den Positionierungsfehler eines Wandlers (14) über der Speicherplatte (16) in einem Datenspeichersystem (10) zu bestimmen, wobei der Sektor folgende Teile umfaßt:

ein Normalfeld (PES1) zur Erzeugung eines Normal-Positionswortes, wobei das Normalfeld eine Länge und eine erste Seite und eine zweite Seite aufweist, wobei die erste Seite entgegengesetzt zur zweiten Seite auf der Speicherplatte ausgerichtet ist,

ein erstes Quadraturfeld (PES2A), das eine Länge aufweist und auf der ersten Seite des Normalfeldes liegt, und

ein zweites Quadraturfeld (PES2B), das eine Länge aufweist und auf der zweiten Seite des Normalfeldes (PES1) liegt, wobei das Normalfeld (PES1) und die ersten und zweiten Quadraturfelder (PES2A, PES2B) Positionsinformationen enthalten,

dadurch gekennzeichnet, daß die ersten (PES2A) und zweiten (PES2B) Quadraturfelder die halbe Länge des Normalfeldes (PES1) aufweisen und bezüglich des Normalfeldes (PES1) derart angeordnet sind, daß vorübergehende Verschiebungen der von dem Normalfeld (PES1) gelesenen Positionsinformation gegenüber der von den Quadraturfeldern (PES2A, PES2B) gelesenen Positionsinformation kompensiert werden, die durch die radiale Geschwindigkeit eines Wandlers (14) über der Speicherplatte (16) hervorgerufen werden, wobei die ersten (PES2A) und zweiten (PES2B) Quadraturfelder derart sind, daß bei ihrer Kombination zur Erzeugung eines Gesamt-Quadraturwortes das Gesamt-Quadraturwort und das Normal-Positionswort den Wandlerpositionierungsfehler darstellen.

**6.** Vorrichtung zur Erfassung des Wandlerpositionierungsfehlers eines Wandlers (14) in einem Datenspeichersystem (10), dadurch gekennzeichnet, daß die Vorrichtung folgende Teile umfaßt:

eine Speicherplatte (16) mit einem Positionsinformation enthaltenden Sektor, der ein Normalfeld (PES1) mit einer Länge und mit einer ersten Seite und einer zweiten Seite, von denen die erste Seite entgegengesetzt zur zweiten Seite auf der Speicherplatte (16) ausgerichtet ist, ein erstes Quadraturfeld (PES2A) und ein zweites Quadraturfeld (PES2B) einschließt,

erste Leseeinrichtungen zum Lesen von Positionsinformation von dem ersten Quadraturfeld (PES2A),

zweite Leseeinrichtungen zum Lesen von Positionsinformation von dem Normalfeld (PES1) zur Erzeugung eines Normal-Positionswortes, und

dritte Leseeinrichtungen zum Lesen von Positionsinformation von dem zweiten Quadraturfeld (PES2B),

dadurch gekennzeichnet, daß die ersten (PES2A) und zweiten (PES2B) Quadraturfelder die halbe Länge des Normalfeldes (PES1) aufweisen und auf der ersten bzw. zweiten Seite des Normalfeldes (PES1) angeordnet sind, und daß eine erste Kombinationseinrichtung zur Kombination der Positionsinformation von dem ersten Quadraturfeld (PES2A) mit der Positionsinformation von dem zweiten Quadraturfeld (PES2B) vorgesehen ist, um ein Gesamt-Quadraturwort zu erzeugen, wobei die erste Kombinationseinrichtung die Positionsinformation kombiniert, um Verschiebungen zwischen der Positionsinformation von den Normal- und Quadraturfelder zu kompensieren, die durch eine radiale Geschwindigkeit des Wandlers (14) über der Speicherplatte (16) hervorgerufen werden, und wobei das Gesamt-Quadraturwort und das Normal-Positionswort den Wandlerpositionierungsfehler darstellen.

**7.** Vorrichtung nach Anspruch 6,
gekennzeichnet durch eine zweite Kombinationseinrichtung zum Kombinieren des Normal-Positionswortes mit dem Gesamt-Quadraturwort zur Erzeugung einer zusammengesetzten Positionsfehler-Abtastprobe, die den Wandlerpositionierungsfehler darstellt.

**8.** Vorrichtung nach Anspruch 7,
gekennzeichnet durch vierte Leseeinrichtungen zum Lesen von Positionsinformation von einem Spuridentifikationsfeld auf der Speicherplatte zur Erzeugung eines Spuridentifikationswortes.

**9.** Vorrichtung nach Anspruch 8,
gekennzeichnet durch eine dritte Kombinationseinrichtung zum Kombinieren des Spuridentifikationswortes mit der zusammengesetzten Positionsfehler-Abtastprobe zur Erzeugung eines Gesamt-Positionswortes, das die Gesamt-Wandlerposition darstellt.

## Revendications

**1.** Procédé pour détecter une erreur de positionnement de transducteur d'un transducteur (14) dans un système de stockage de données (10), le procédé comprenant:

la prévision d'un premier (PES2A) et d'un deuxième (PES2B) champs de quadrature et d'un champ normal (PES1) sur un disque (16) dans un système de stockage de données (10), les champs de quadrature et le champ normal contenant chacun des informations de positionnement, et les premier et deuxième champs de quadrature étant positionnés sur des côtés opposés du champ normal (PES1);

la lecture des informations de positionnement à partir du premier champ de quadrature (PES2A);

la lecture des informations de positionnement à partir du champ normal (PES1) pour produire un mot de positionnement normal; et

la lecture des informations de positionnement à partir du deuxième champ de quadrature (PES2B);

caractérisé en ce que les premier (PES2A) et deuxième (PES2B) champs de quadrature sont chacun égal à la moitié de la longueur du champ normal (PES1); et

en ce que les informations de positionnement à partir du premier champ de quadrature (PES2A) sont combinées avec les informations de positionnement à partir du deuxième champ de quadrature (PES2B) pour produire un mot de quadrature total pour compenser un décalage temporel au niveau des informations de positionnement lues à partir du champ normal (PES1) par rapport aux informations de positionnement lues à partir des premier et deuxième champs de quadrature provoqué par la vitesse radiale du transducteur (14) au-dessus du disque (16); le mot de quadrature total et le mot de positionnement normal représentant l'erreur de positionnement du transducteur.

**2.** Procédé selon la revendication 1, caractérisé en ce qu'il comprend la combinaison du mot de positionnement normal avec le mot de quadrature total pour produire un échantillon d'erreur de positionnement composite représentant l'erreur de positionnement du transducteur.

**3.** Procédé selon la revendication 1 ou 2, caractérisé en ce qu'il comprend la lecture des informations de positionnement à partir d'un champ d'identification de piste sur le disque pour produire un mot d'identification de piste.

**4.** Procédé selon la revendication 3, caractérisé en ce qu'il comprend la combinaison du mot d'identification de piste avec l'échantillon d'erreur de positionnement composite pour produire un mot de positionnement total représentant le positionnement total du transducteur.

**5.** Disque de stockage de données avec un secteur sur celui-ci, ledit secteur contenant des informations de positionnement utilisées pour déterminer l'erreur de positionnement d'un transducteur (14) au-dessus du disque (16) dans un système de stockage de données (10), le secteur comprenant:

un champ normal (PES1) pour générer un mot de positionnement normal et ayant une longueur et un premier côté et un deuxième côté, le premier côté étant orienté face au deuxième côté sur le disque;

un premier champ de quadrature (PES2A), ayant une longueur et étant situé sur le premier côté du champ normal; et

un deuxième champ de quadrature (PES2B), ayant une longueur et étant situé sur le deuxième côté du champ normal (PES1), le champ normal (PES1) et les premier et deuxième champs de quadrature (PES2A, PES2B) contenant des informations de positionnement;

caractérisé en ce que les premier (PES2A) et deuxième (PES2B) champs de quadrature sont égaux à la moitié de la longueur du champ normal (PES1), et sont agencés par rapport au champ normal (PES1) pour compenser des décalages temporels au niveau des informations de positionnement lues à partir du champ normal (PES1) par rapport à des informations de positionnement lues à partir des champs de quadrature (PES2A, PES2B) provoqués par une vitesse radiale d'un transducteur (14) au-dessus du disque (16), les premier (PES2A) et deuxième (PES2B) champs de quadrature étant constitués de telle sorte que, lorsqu'ils sont combinés, ils produisent un mot de quadrature total, le mot de quadrature total et le mot de positionnement normal représentant l'erreur de positionnement du transducteur.

**6.** Appareil pour détecter une erreur de positionnement de transducteur d'un transducteur (14) dans un système de stockage de données (10), caractérisé en ce qu'il comprend:

un disque de stockage (16) ayant un secteur contenant des informations de positionnement, le secteur incluant un champ normal (PES1) ayant une longueur et ayant un premier côté et un deuxième côté, le premier côté étant orienté face au deuxième côté sur le disque (16), un premier champ de quadrature (PES2A), et un deuxième champ de quadrature (PES2B);

des premiers moyens de lecture pour lire des informations de positionnement à partir du premier champ de quadrature (PES2A);

des deuxièmes moyens de lecture pour lire des informations de positionnement à partir du champ normal (PES1) pour produire un mot de positionnement normal; et

des troisièmes moyens de lecture pour lire des informations de positionnement à partir du deuxième champ de quadrature (PES2B);

caractérisé en ce que les premier (PES2A) et deuxième (PES2B) champs de quadrature sont égaux à la moitié de la longueur du champ normal (PES1) et sont positionnés sur les premier et deuxième côtés du champ normal (PES1), respectivement; et en ce que des premiers moyens de combinaison sont prévus pour combiner les informations de positionnement à partir du premier champ de quadrature (PES2A) avec les informations de positionnement à partir du deuxième champ de quadrature (PES2B) pour produire un mot de quadrature total, les premiers moyens de combinaison combinant les informations de positionnement pour compenser des décalages entre les informations de positionnement à partir des champs normal et de quadrature, provoqués par la vitesse radiale du transducteur (14) au-dessus du disque (16), et le mot de quadrature total et le mot de positionnement normal représentant l'erreur de positionnement du transducteur.

**7.** Appareil selon la revendication 6, caractérisé en ce qu'il comprend des deuxièmes moyens de combinaison pour combiner le mot de positionnement normal avec le mot de quadrature total pour produire un échantillon d'erreur de positionnement composite représentant l'erreur de positionnement du transducteur.

8. Appareil selon la revendication 7, caractérisé en ce qu'il comprend des quatrièmes moyens de lecture pour lire des informations de positionnement à partir d'un champ d'identification de piste sur le disque pour produire un mot d'identification de piste.

9. Appareil selon la revendication 8, caractérisé en ce qu'il comprend des troisièmes moyens de combinaison pour combiner le mot d'identification de piste avec un échantillon d'erreur de positionnement composite pour produire un mot de positionnement total représentant le positionnement total du transducteur.

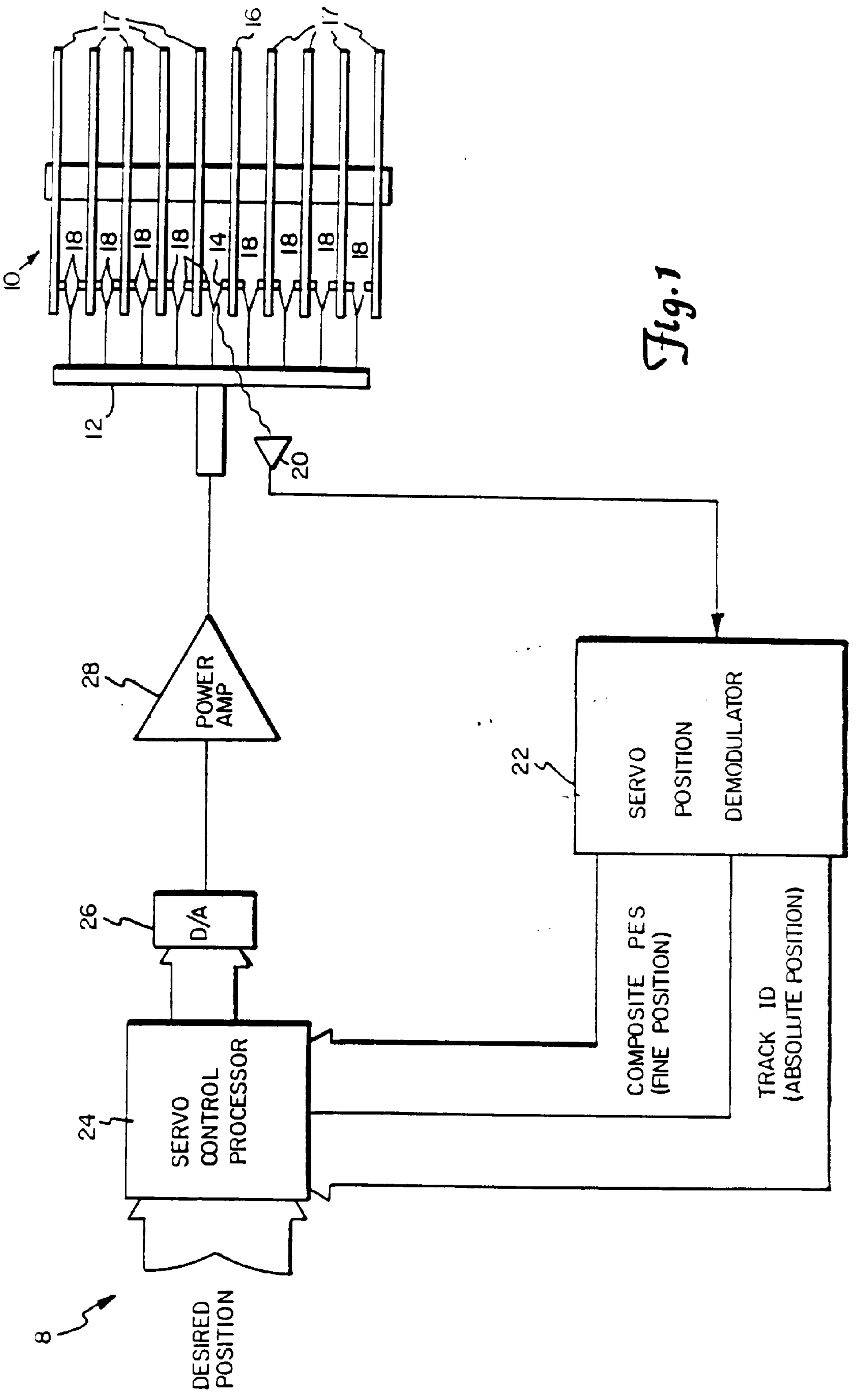
10
17
16
17
18
18
18
18
14
18
18
18
18
12
20
28
POWER AMP
22
SERVO POSITION DEMODULATOR
26
D/A
COMPOSITE PES (FINE POSITION)
TRACK ID (ABSOLUTE POSITION)
24
SERVO CONTROL PROCESSOR
8
DESIRED POSITION

Fig.1

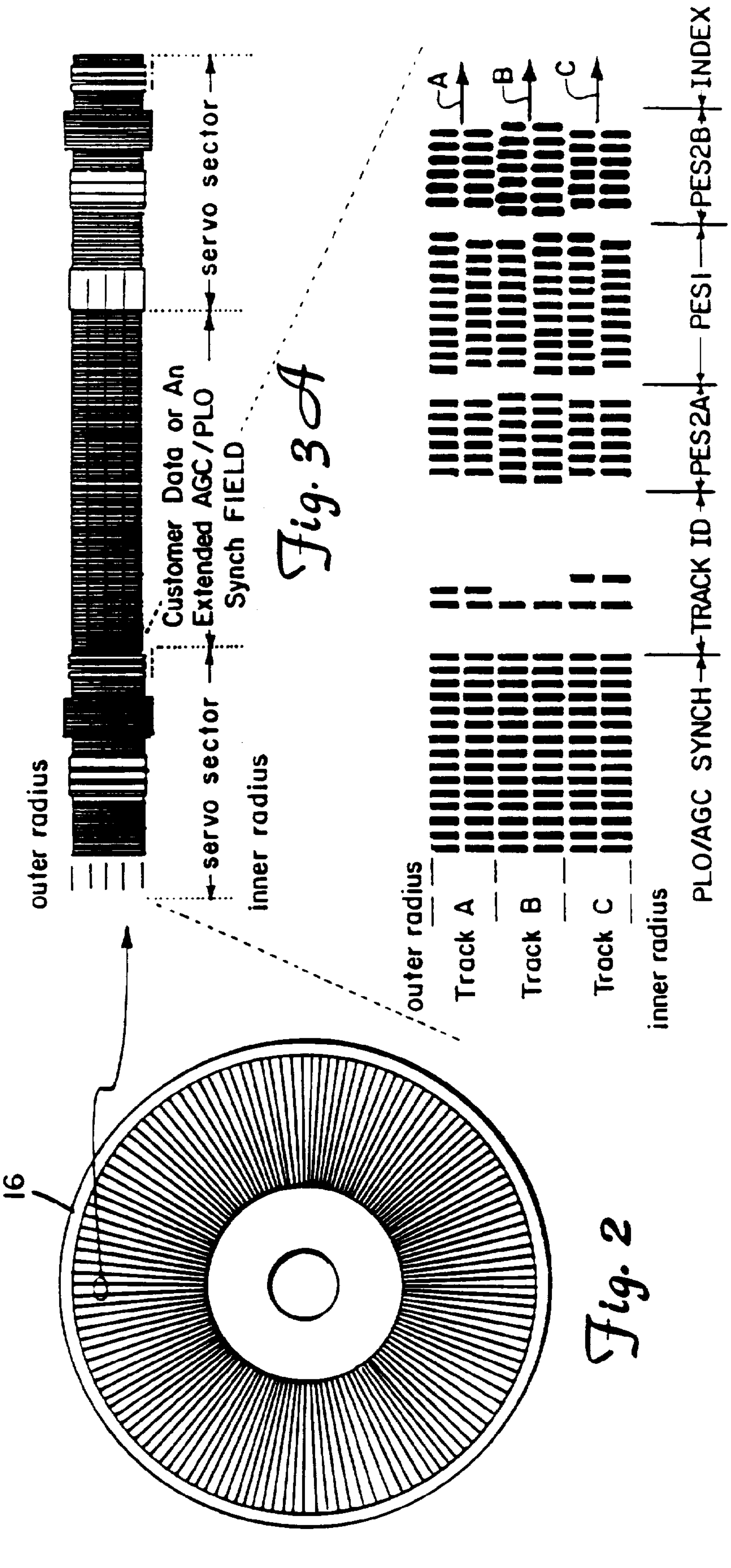


Fig. 2

Fig. 3A

Fig. 3B

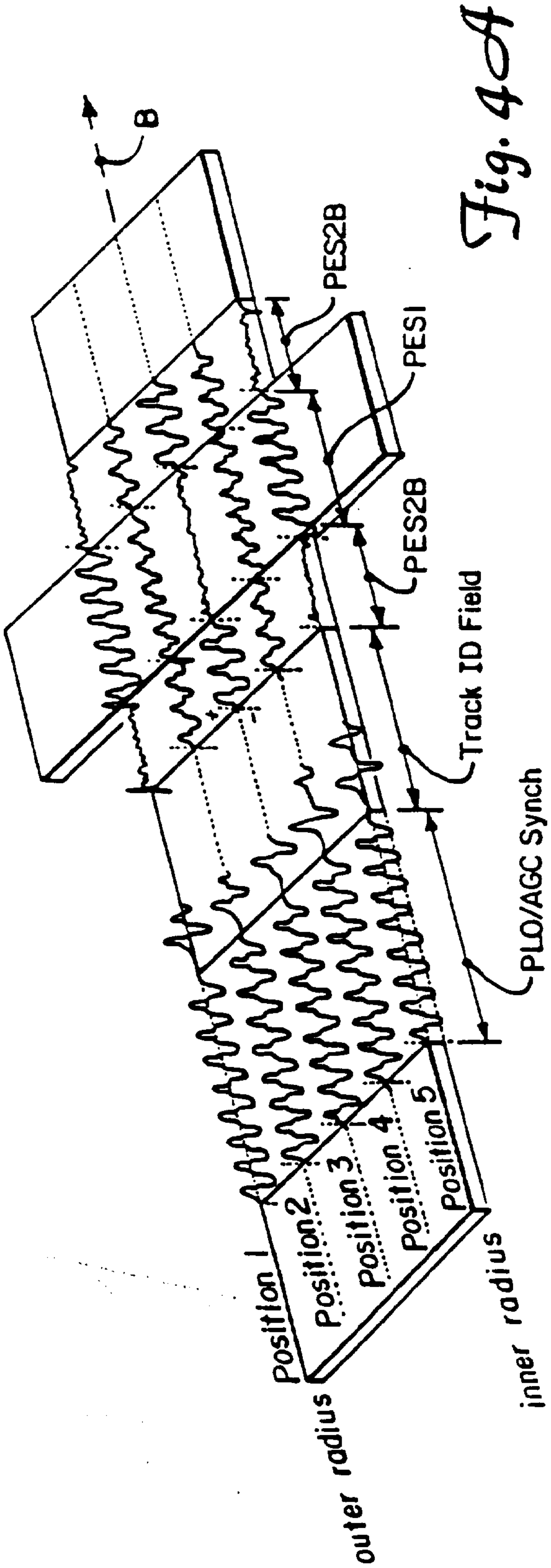
B
PES2B
PESI
PES2B
Track ID Field
PLO/AGC Synch
Position 1
Position 2
Position 3
Position 4
Position 5
outer radius
inner radius

Fig. 4A

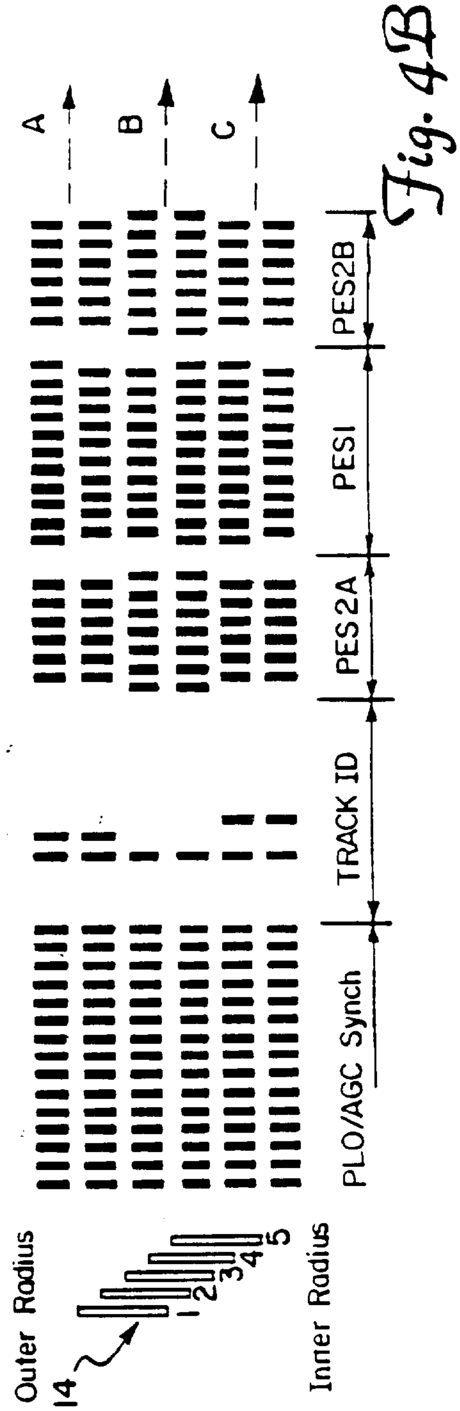
A
B
C
Outer Radius
14
1
2
3
4
5
Inner Radius
PLO/AGC Synch
TRACK ID
PES 2A
PESI
PES2B

Fig. 4B

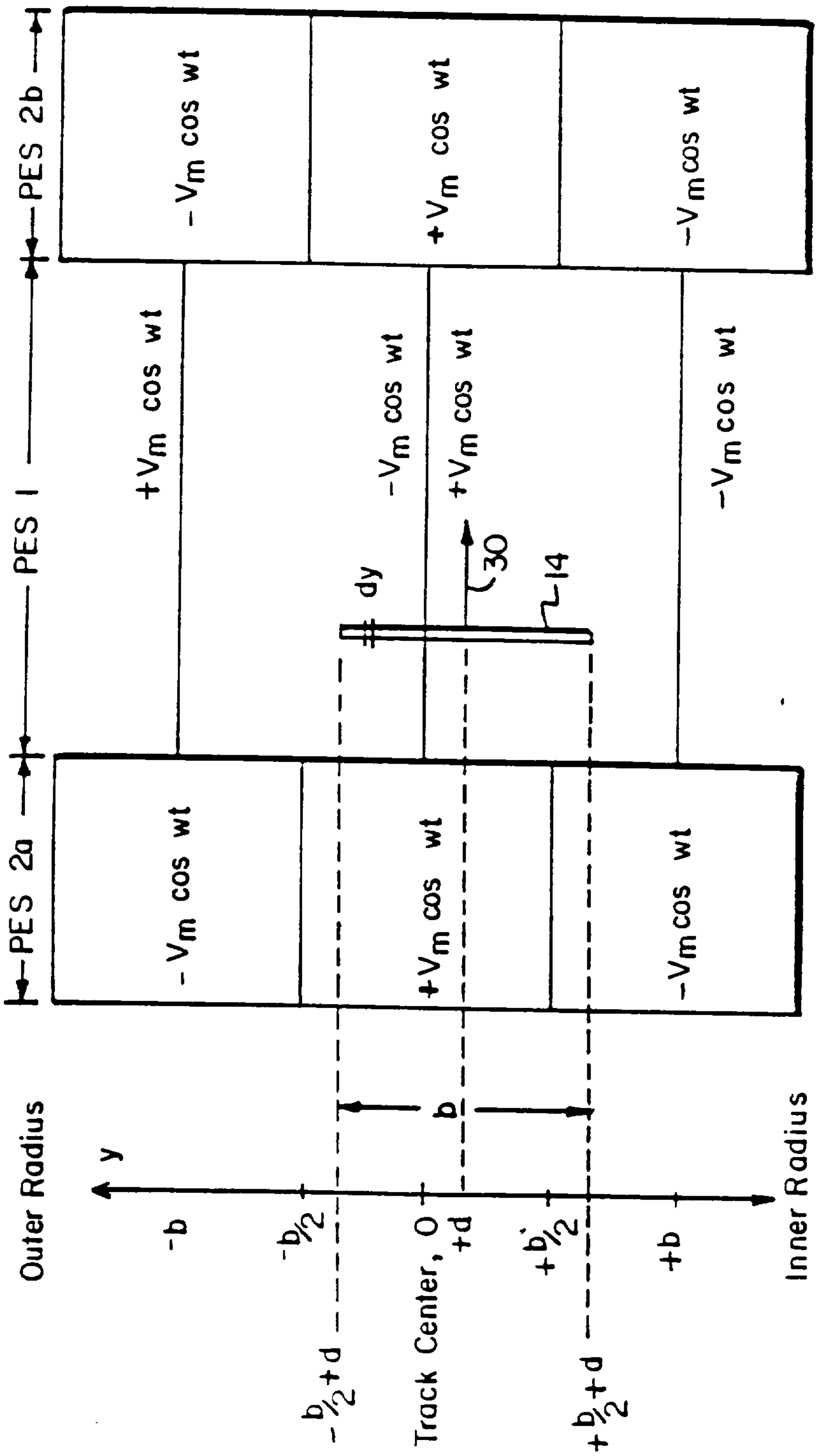
PES 2a
PES 1
PES 2b
- Vm cos wt
+Vm cos wt
- Vm cos wt
+Vm cos wt
- Vm cos wt
+Vm cos wt
-Vm cos wt
- Vm cos wt
+Vm cos wt
-Vm cos wt
dy
30
14
b
Outer Radius
y
-b
-b/2
Track Center, 0
+d
+b/2
+b
Inner Radius
-b/2+d
+b/2+d

Fig.5

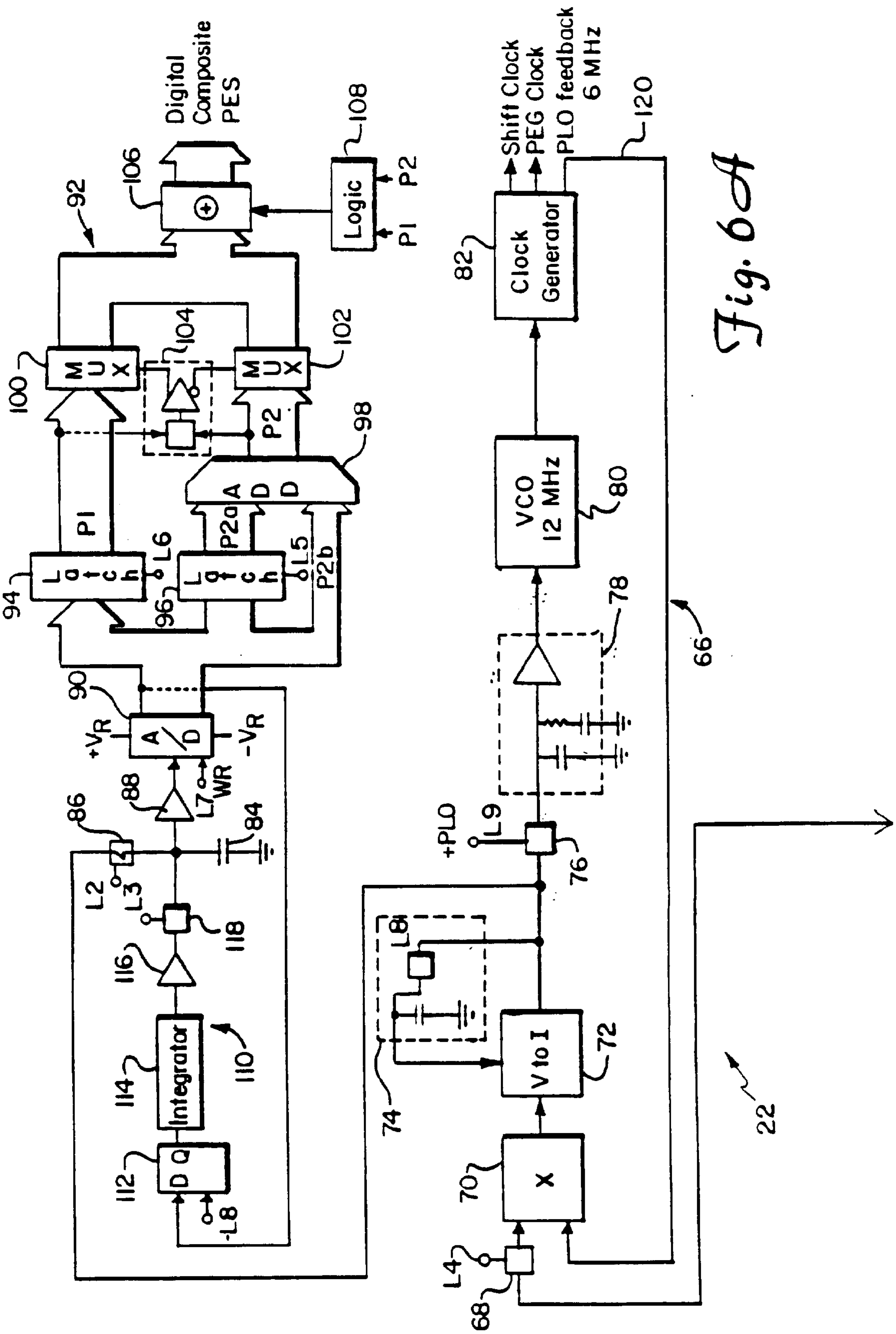
Digital Composite PES
Logic
P1
P2
MUX
Latch
L5
L6
P2a
P2b
ADD
A/D
+VR
-VR
WR
L7
L2
L3
Integrator
D Q
-L8
L4
X
V to I
L8
+PLO
L9
VCO 12 MHz
Clock Generator
Shift Clock
PEG Clock
PLO feedback 6 MHz
22
66
68
70
72
74
76
78
80
82
84
86
88
90
92
94
96
98
100
102
104
106
108
110
112
114
116
118
120

Fig. 6A

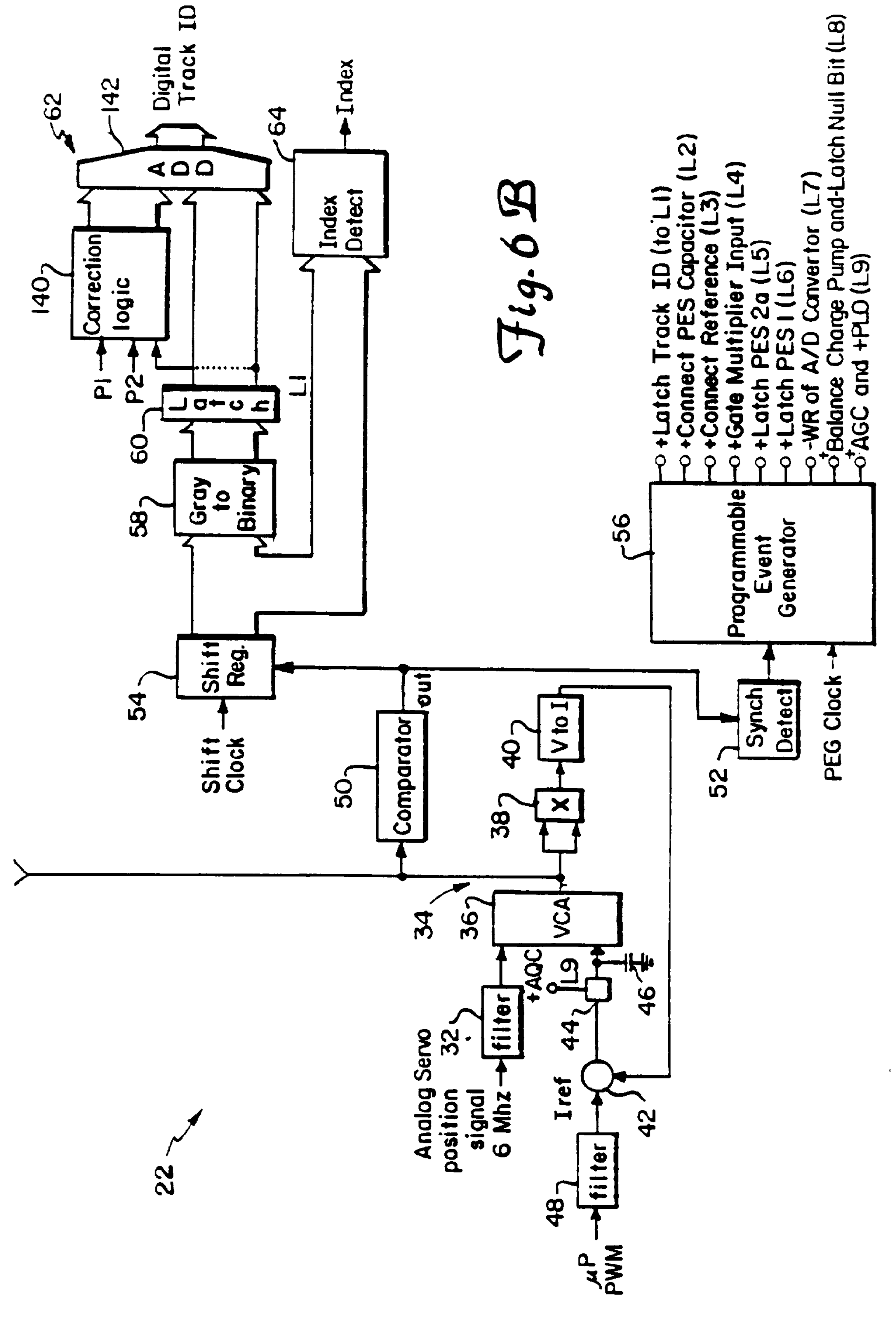
Digital Track ID
Index
A
D
D
Correction logic
Index Detect
P1
P2
L a t c h
L1
Gray to Binary
Shift Reg.
Shift Clock
Comparator
out
Programmable Event Generator
+Latch Track ID (to L1)
+Connect PES Capacitor (L2)
+Connect Reference (L3)
+Gate Multiplier Input (L4)
+Latch PES 2a (L5)
+Latch PES 1 (L6)
-WR of A/D Convertor (L7)
+Balance Charge Pump and-Latch Null Bit (L8)
+AGC and +PLD (L9)
V to I
X
Synch Detect
PEG Clock
VCA
+AGC
L9
Analog Servo position signal 6 Mhz
filter
Iref
filter
µP PWM
22
32
34
36
38
40
42
44
46
48
50
52
54
56
58
60
62
64
140
142
Fig. 6B

*Fig.7*

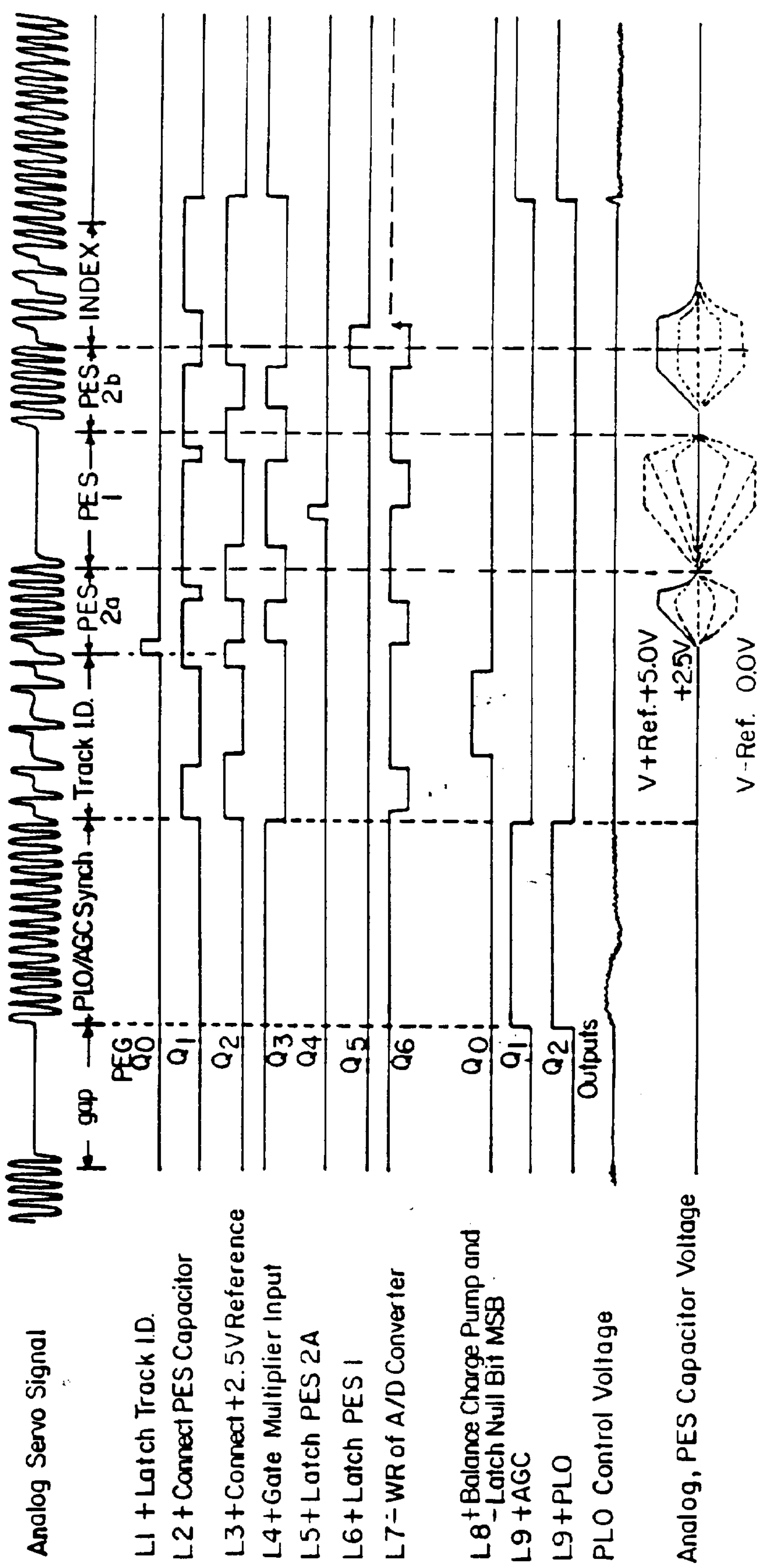

Analog Servo Signal
L1 + Latch Track I.D.
L2 + Connect PES Capacitor
L3 + Connect + 2.5V Reference
L4 + Gate Multiplier Input
L5 + Latch PES 2A
L6 + Latch PES I
L7 - WR of A/D Converter
L8 + Balance Charge Pump and - Latch Null Bit MSB
L9 + AGC
L9 + PLO
PLO Control Voltage
Analog, PES Capacitor Voltage
gap
PLO/AGC Synch
Track I.D.
PES 2a
PES I
PES 2b
INDEX
PEG Q0
Q1
Q2
Q3
Q4
Q5
Q6
Q0
Q1
Q2
Outputs
V+Ref. +5.0V
+2.5V
V-Ref. 0.0V

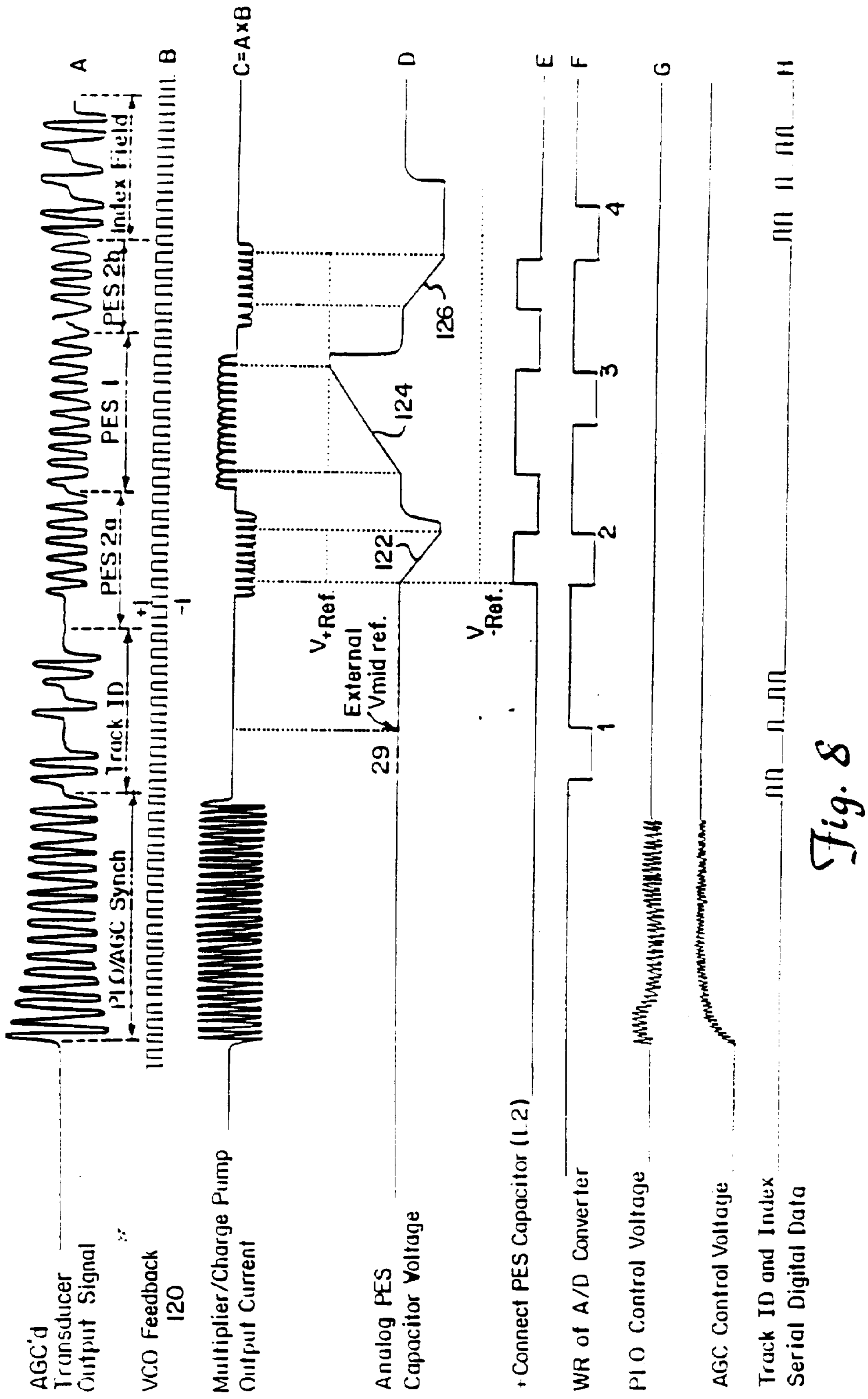
AGC'd Transducer Output Signal
VCO Feedback 120
Multiplier/Charge Pump Output Current
Analog PES Capacitor Voltage
+Connect PES Capacitor (1,2)
WR of A/D Converter
PLO Control Voltage
AGC Control Voltage
Track ID and Index Serial Digital Data
PLO/AGC Synch
Track ID
PES 2a
PES 1
PES 2b
Index Field
A
B
C=AxB
D
E
F
G
H
+1
-1
29
External Vmid ref.
V+Ref.
V-Ref.
122
124
126
1
2
3
4

Fig. 8

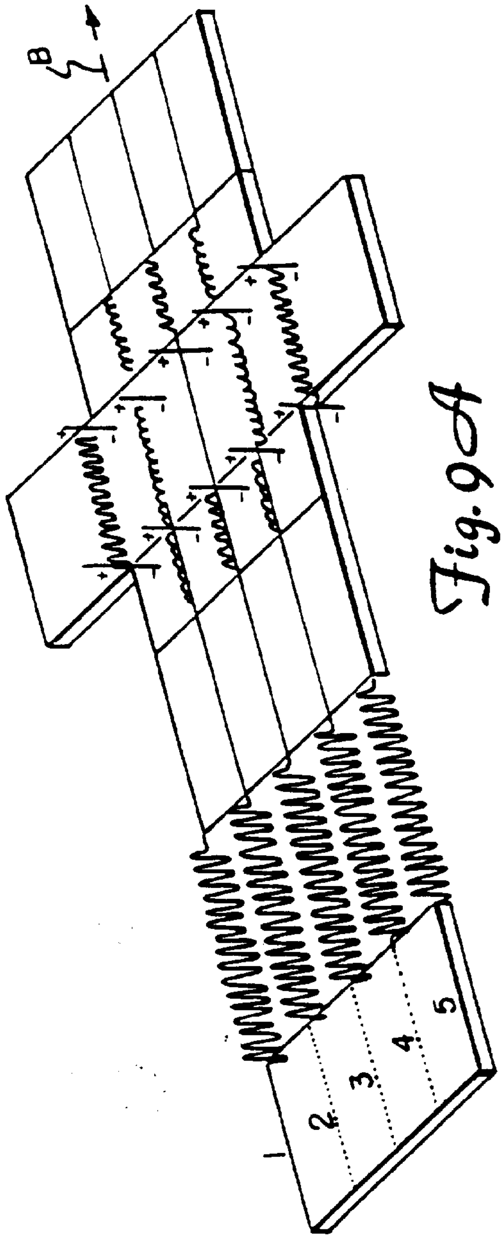
B
1
2
3
4
5

Fig. 9A

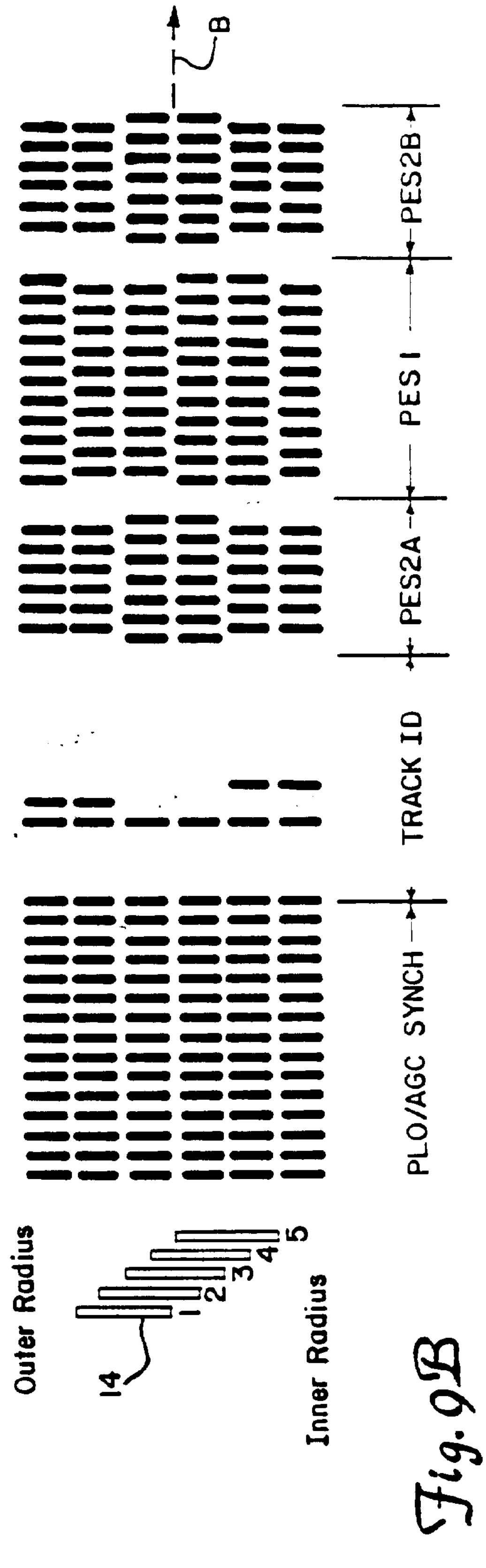
B
PLO/AGC SYNCH
TRACK ID
PES2A
PES I
PES2B
Outer Radius
Inner Radius
14
1
2
3
4
5

Fig. 9B

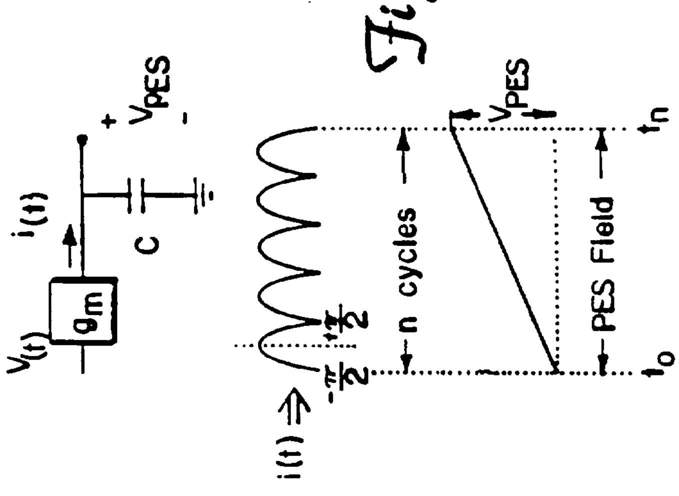
$V_{(t)}$
$g_m$
$i_{(t)}$
C
+
$V_{PES}$
-
$i(t) \Rightarrow$
$-\frac{\pi}{2}$
$+\frac{\pi}{2}$
n cycles
PES Field
$t_o$
$t_n$
$V_{PES}$

Fig. 10

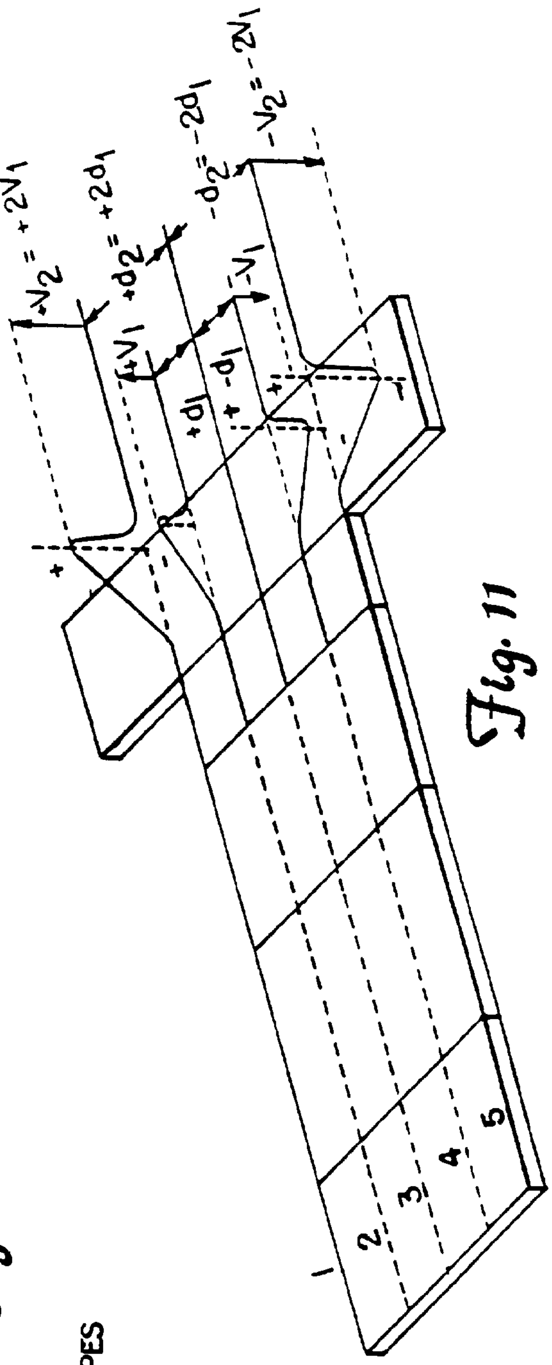
$+V_2 = +2V_1$
$+d_2 = +2d_1$
$-d_2 = -2d_1$
$-V_2 = -2V_1$
$+V_1$
$-V_1$
$+d_1$
$-d_1$
1
2
3
4
5

Fig. 11

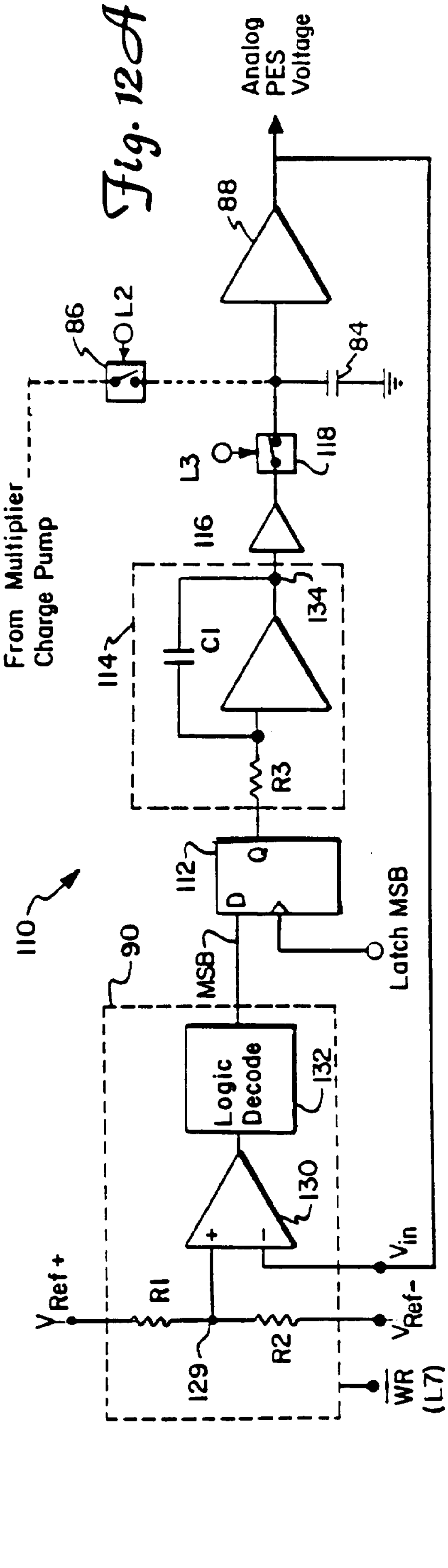


Fig. 12A

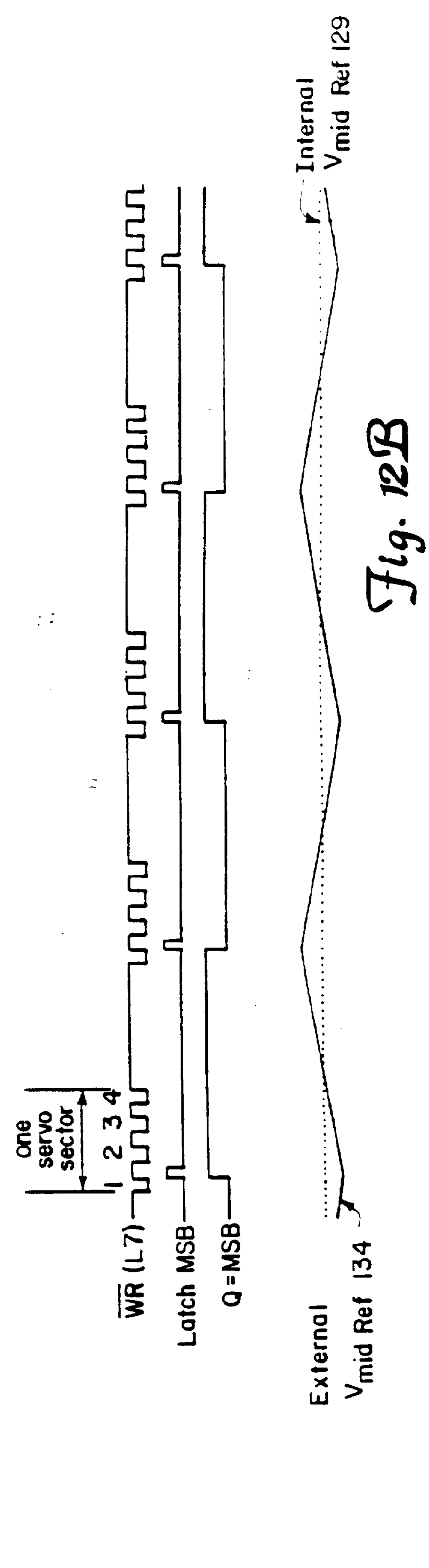


Fig. 12B

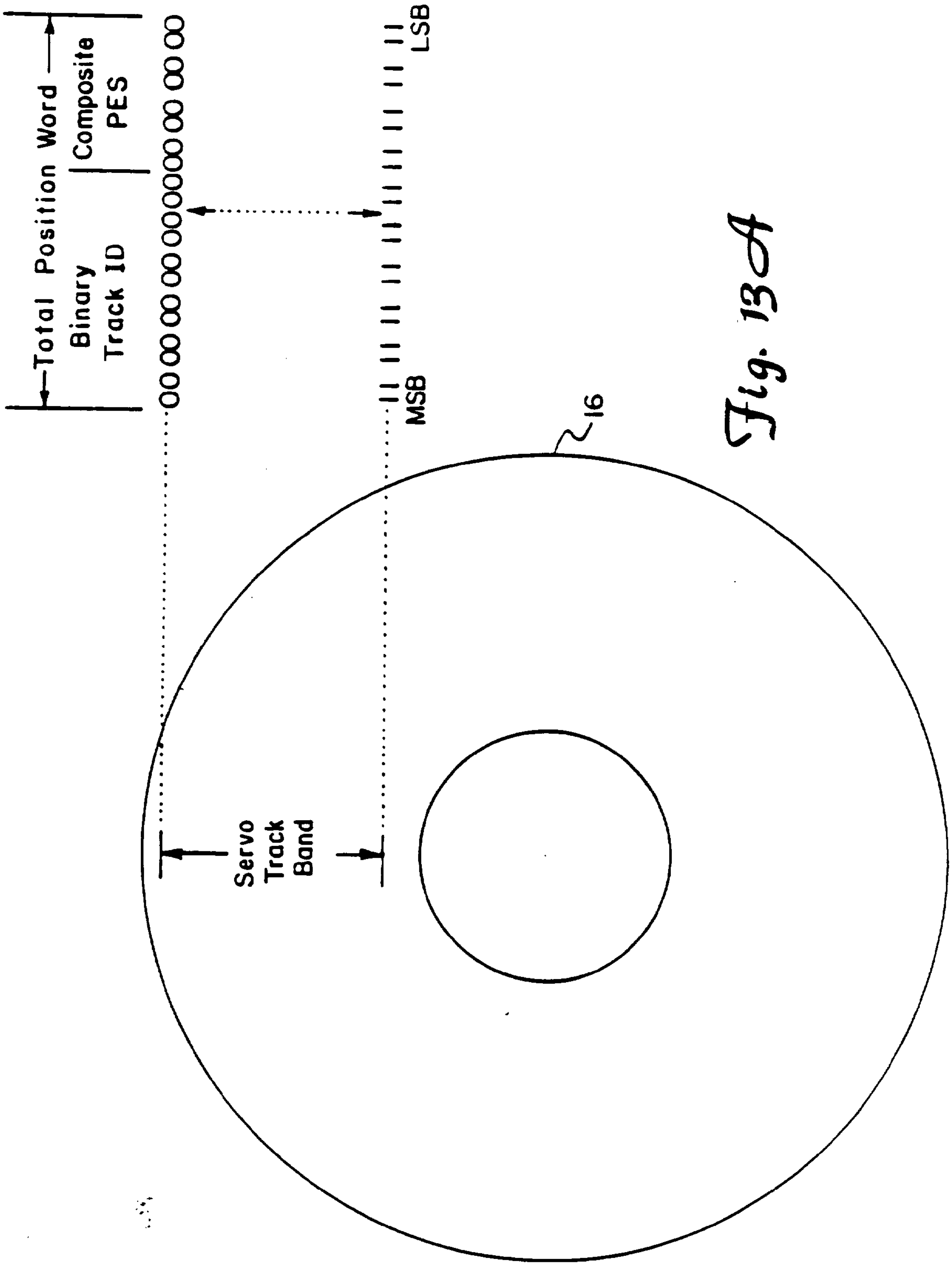
Total Position Word
Binary Track ID
Composite PES
MSB
LSB
16
Servo Track Band

Fig. 13A

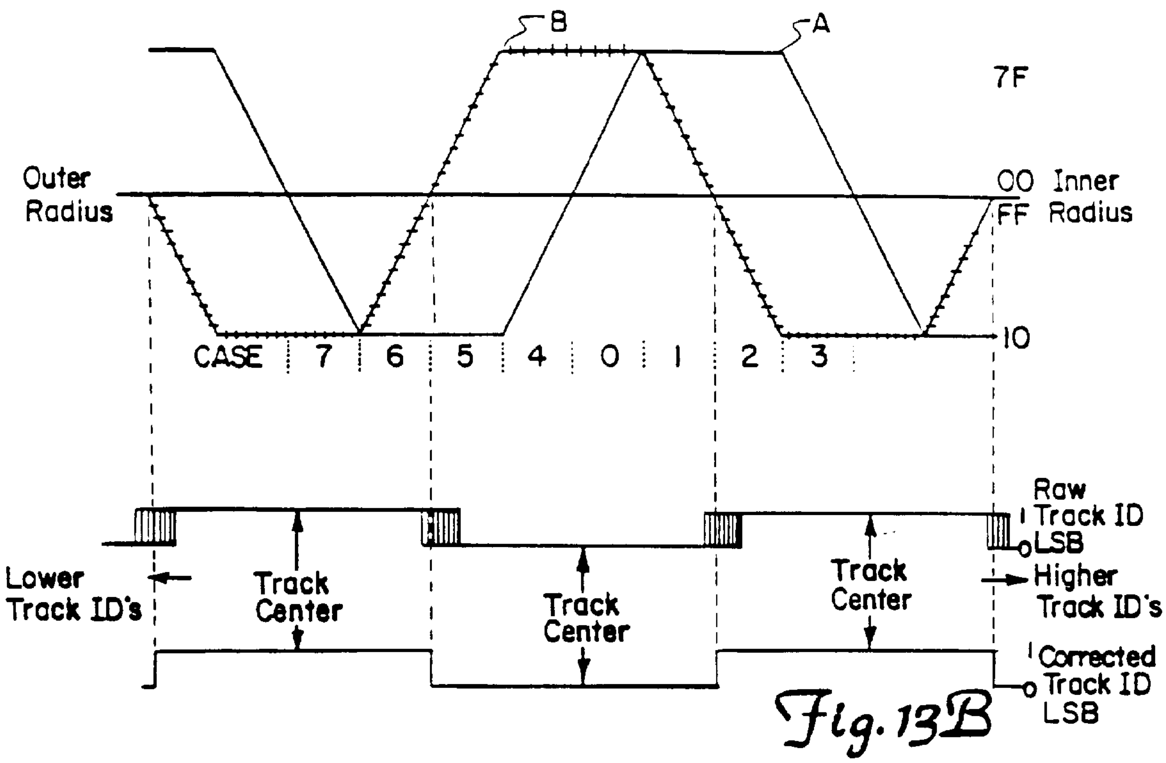


Fig. 13B

TRUTH TABLE

| Case | PES 1 Sign Bit | PES 2 Sign Bit | Raw TRK ID LSB | Corrected TRK ID LSB | Correction Number Base 10 | Correction Number 2's Complement |
|---|---|---|---|---|---|---|
| 0 | 0 | 0 | 0 | 0 | 0 | 00000000000 |
| 1 | 0 | 0 | 1 | 0 | -1 | 11111111111 |
| 2 | 0 | 1 | 0 | 1 | +1 | 00000000001 |
| 3 | 0 | 1 | 1 | 1 | 0 | 00000000000 |
| 4 | 1 | 0 | 0 | 0 | 0 | 00000000000 |
| 5 | 1 | 0 | 1 | 0 | +1 | 00000000001 |
| 6 | 1 | 1 | 0 | 1 | -1 | 11111111111 |
| 7 | 1 | 1 | 1 | 1 | 0 | 00000000000 |

Fig. 13C

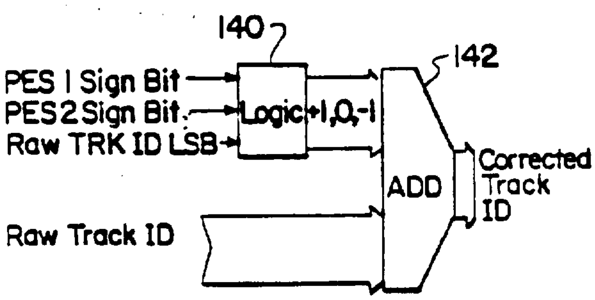


Fig. 13D

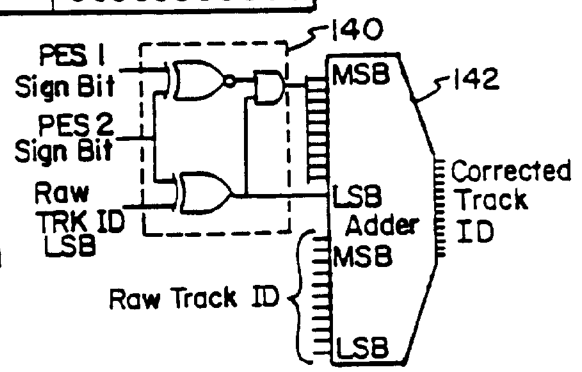


Fig. 13E

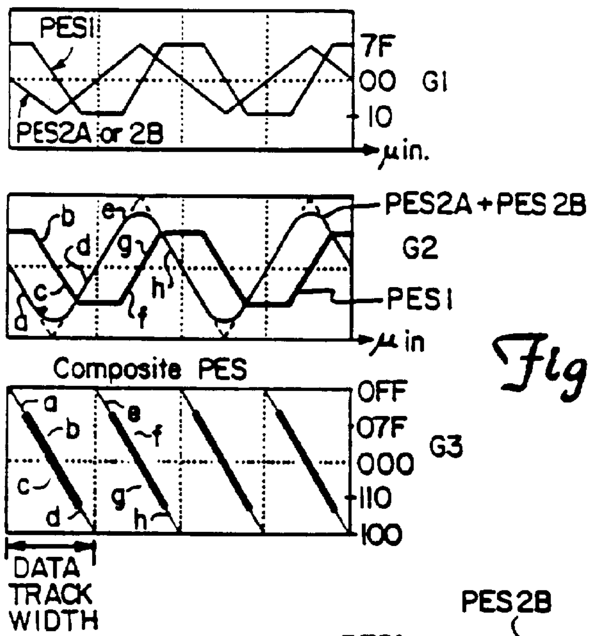


Fig. 14A

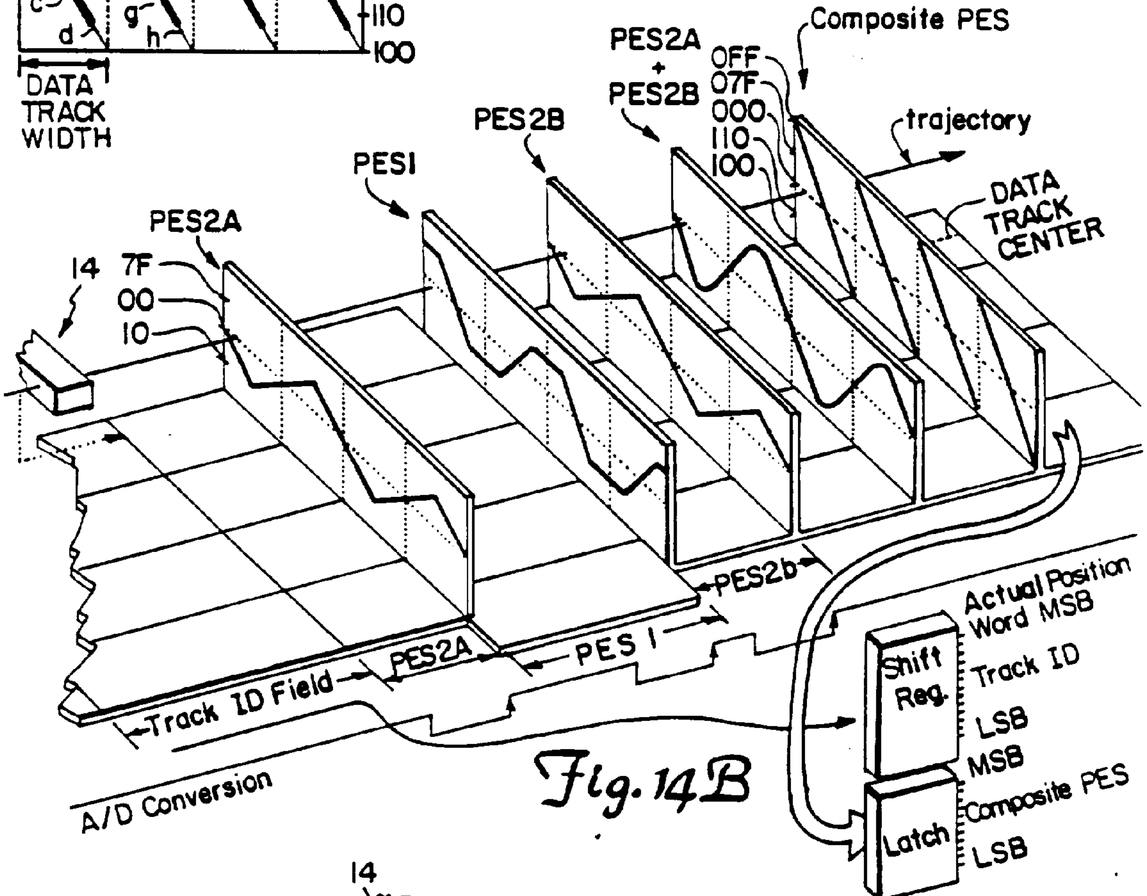


Fig. 14B

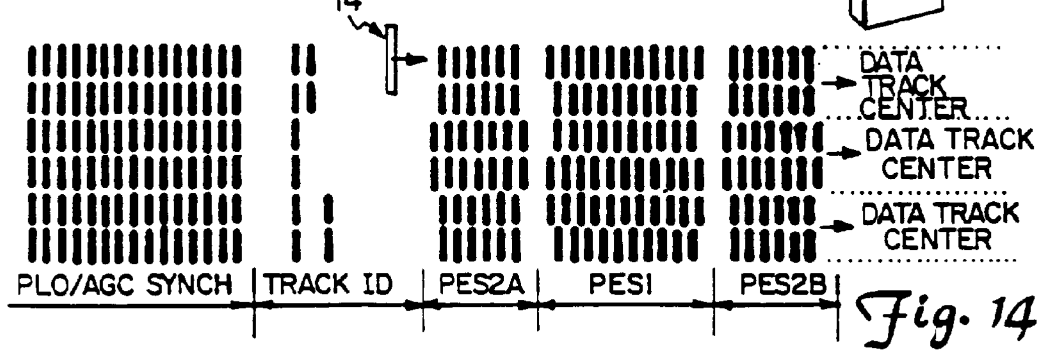


Fig. 14C

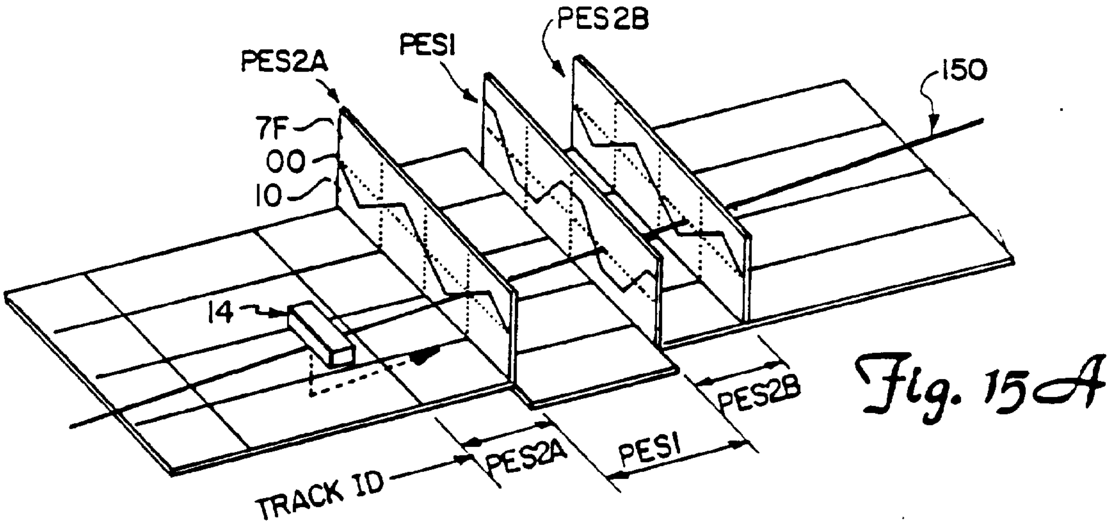


Fig. 15A

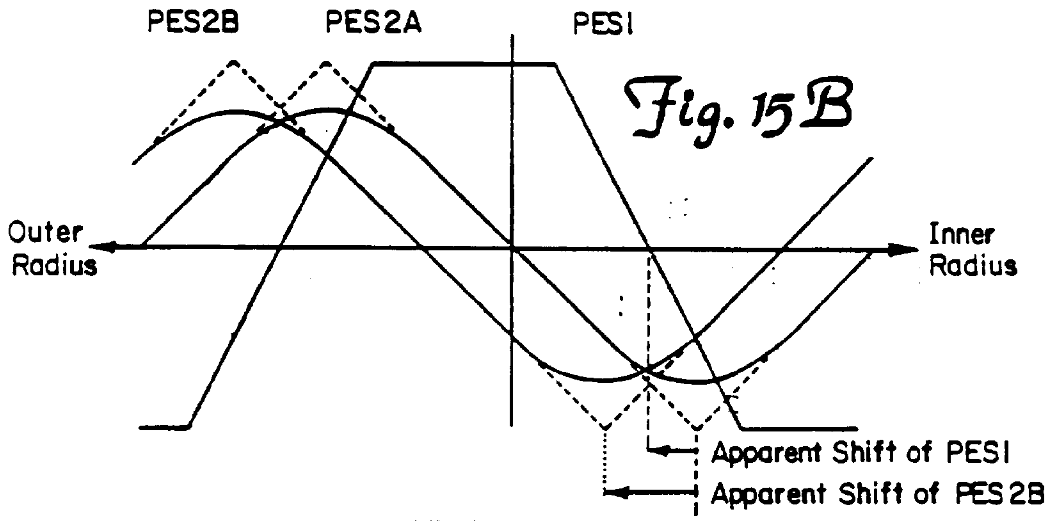


Fig. 15B

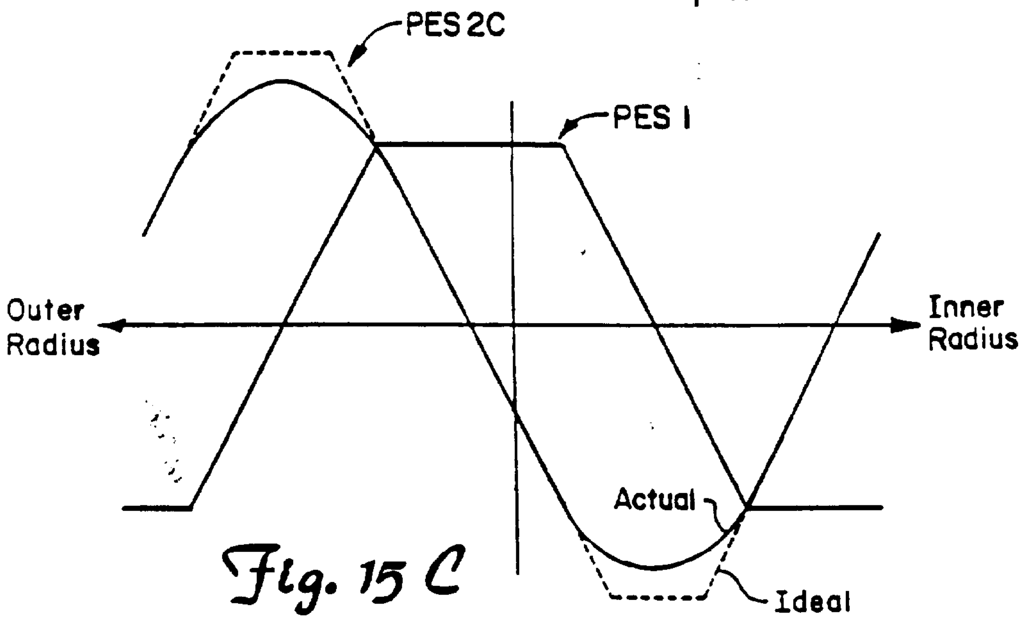


Fig. 15 C

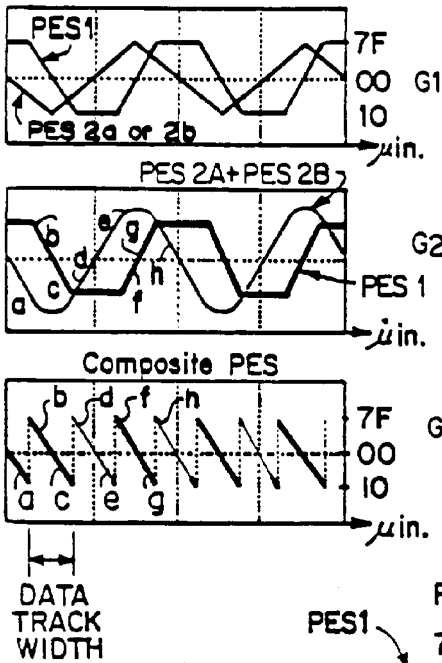


Fig. 16A

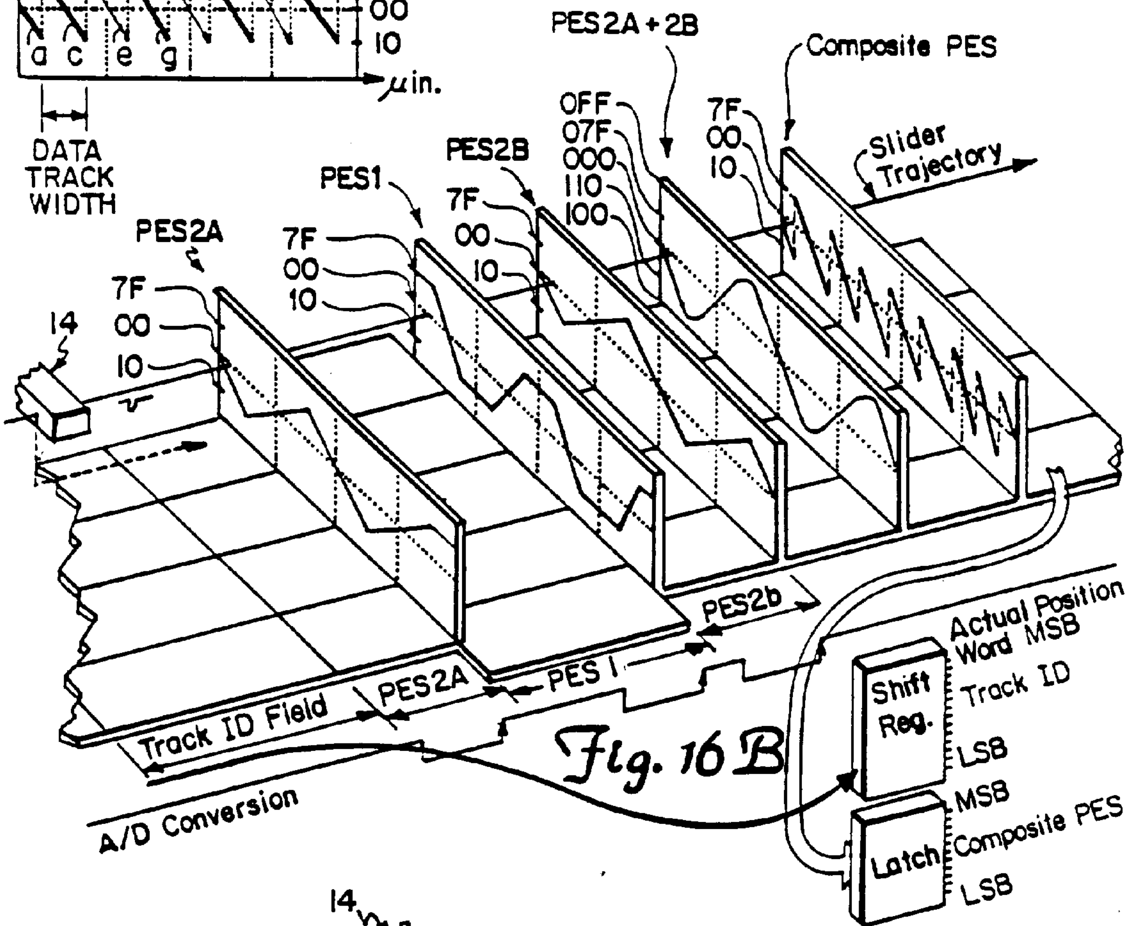


Fig. 16B

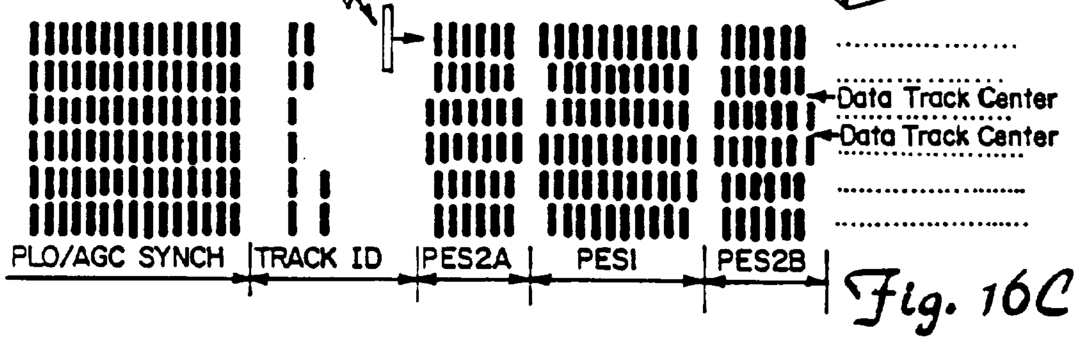


Fig. 16C

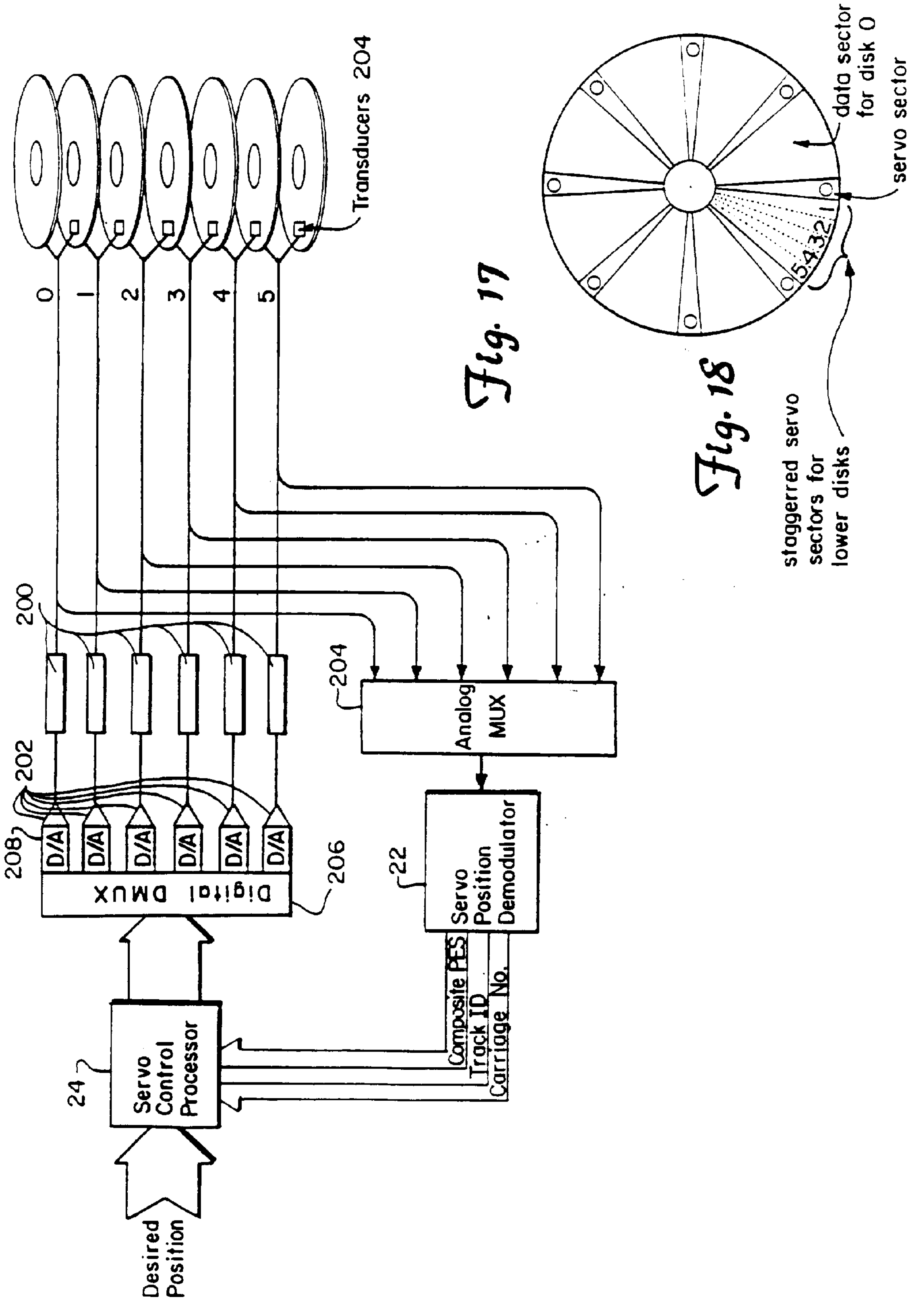
Transducers 204
0
1
2
3
4
5
200
202
208
D/A
D/A
D/A
D/A
D/A
D/A
Digital DMUX
206
204
Analog MUX
22
Servo Position Demodulator
Composite PES
Track ID
Carriage No.
24
Servo Control Processor
Desired Position
data sector for disk 0
servo sector
5 4 3 2 1
staggerred servo sectors for lower disks

Fig. 17

Fig. 18